(19) Europäisches Patentamt
European Patent Office
Office européen des brevets

(11) EP 0 592 364 B1

(12) # EUROPÄISCHE PATENTSCHRIFT

(45) Veröffentlichungstag und Bekanntmachung des Hinweises auf die Patenterteilung:
**11.07.2001 Patentblatt 2001/28**

(51) Int Cl.[7]: **C08K 5/524**, C08K 5/5393, C08K 5/17, C08K 5/3435, C08K 5/3462

(21) Anmeldenummer: **93810684.6**

(22) Anmeldetag: **27.09.1993**

(54) **Verfahren zur Stabilisierung dreiwertiger Phosphorverbindungen mit Aminen**

Process for the stabilization of trivalent phosphorus compounds with amines

Procédé pour la stabilisation de composés du phosphore trivalet avec des amines

(84) Benannte Vertragsstaaten:
**AT BE CH DE ES FR GB IT LI NL SE**

(30) Priorität: **05.10.1992 CH 310492**
**27.11.1992 CH 364792**

(43) Veröffentlichungstag der Anmeldung:
**13.04.1994 Patentblatt 1994/15**

(73) Patentinhaber: **Ciba Specialty Chemicals Holding Inc.**
**4057 Basel (CH)**

(72) Erfinder:
- **Quotschalla, Udo, Dr.**
**D-64646 Heppenheim (DE)**
- **Linhart, Helmut**
**CH-4153 Reinach (CH)**

(56) Entgegenhaltungen:
**EP-A- 0 143 464** **EP-A- 0 167 969**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 592 364 B1

## Beschreibung

Die Erfindung betrifft ein Verfahren zur Erhöhung der Lagerstabilität von organischen Phosphiten und Phosphoniten.

Organische Phosphite und Phosphonite finden vielfach Verwendung als Hitzestabilisatoren für synthetische Polymere. Herstellung, Lagerung und Einsatz von Phosphiten und Phosphoniten ist jedoch dadurch erschwert, daß diese Verbindungen sehr leicht hydrolisieren. Ein besonderes Problem stellt die Lagerung des Materials bei hoher Luftfeuchtigkeit dar.

Verschiedene Methoden wurden vorgeschlagen, um zu Produkten mit verbesserter Stabilität gegenüber Hydrolyse zu gelangen; dies sind neben Herstellungsverfahren, die zu reineren Produkten führen, und Methoden zur Reinigung der fertigen Verbindungen vor allem der Zusatz spezieller Stabilisatoren, die einerseits die Hydrolyseneigung verringern und andererseits keine negativen Wirkungen bei dem späteren Einsatz der Verbindungen hervorrufen.

EP-A-278 579 schlägt den Einsatz eines hydrolysestabilen Stabilisatorgemisches vor, worin das kristalline Phosphit in einem amorphen phenolischen Antioxidans eingebettet ist. Dieses Stabilisatorgemisch ist durch schnelles Abkühlen einer Schmelze beider Verbindungen oder einer Suspension aus kristallinem Phosphit und flüssigem Phenolderivat erhältlich.

Der Zusatz von Aminen als Hydrolysestabilisatoren ist beispielsweise in US-A-3 553 298 beschrieben. Weitere Publikationen zur Stabilisierung von Phosphiten mit Aminen sind US-A-3 787 537, EP-A-168 721 und EP-A-167 969. Empfohlen werden vor allem tertiäre Alkanol- und Alkylamine, Pyridine und Aniline; typische Beispiele sind Triethylamin, Diethanolamin, Triethanolamin, Di- und Triisopropanolamin (TIPA), Tetraisopropanolethylendiamin, Anilin, Phenylendiamin und Hexamethylentetramin. Die Amine werden im allgemeinen in Mengen bis zu ca. 5 Gew.-% (bezogen auf das zu stabilisierende Phosphit) eingesetzt; die Einarbeitung des Amins geschieht durch trockenes Vermahlen oder durch Lösen in oder Vermischen mit der Phosphit-Schmelze und anschließender Kristallisation.

Trotz der hier aufgeführten, bekannten Stabilisierungsmethoden besteht Bedarf an einer weiteren Verbesserung der Hydrolysestabilität von organischen Phosphiten und Phosphoniten.

Es wurde nun gefunden, daß die stabilisierende Wirkung von Aminen sich überraschend steigern läßt, wenn das Amin in einem speziellen Verfahren appliziert wird.

Gegenstand der Erfindung ist daher ein Verfahren zur Stabilisierung eines kristallinen organischen Phosphits oder Phosphonits gegen Hydrolyse, dadurch gekennzeichnet, daß ein auf 50-100°C temperiertes Gemisch, welches Phosphit bezw. Phosphonit, ein Lösungsmittel oder Lösungsmittelgemisch und 0,1 bis 100 Gew.-% (bezogen auf Phosphit bezw. Phosphonit) eines Amins enthält, als homogene Schmelze in ein flüssiges Kristallisationsmedium gegeben wird, dessen Temperatur während der Zugabe um 10-70°C unter der Temperatur der Schmelze gehalten wird.

Die Schmelze ist das flüssige Gemisch enthaltend Amin, Lösungsmittel und das zu stabilisierende Phosphit bezw. Phosphonit. Die Schmelze kann wenig oder viel Lösungsmittel enthalten, beispielsweise 20 oder 500 Gew.-% (bezogen auf Phosphit bezw. Phosphonit), und kann daher auch den Charakter einer Lösung haben. Wichtig dabei ist, daß die Schmelze homogen ist, d.h. keine der genannten Komponenten mehr kristallin ist und auch keine Trennung in 2 oder mehr flüssige Phasen erfolgt. Als Amin kann eine Einzelverbindung oder ein Gemisch von Verbindungen verwendet werden.

Als Lösungsmittel können grundsätzlich alle organischen Verbindungen oder Verbindungsgemische eingesetzt werden, welche im Temperaturbereich von 10 bis 60°C unter Normaldruck flüssig sind, keine Solvolyse bewirken und oberhalb von 50°C, gegebenenfalls bis 100°C, eine ausreichende Menge an festem Phosphit bezw. Phosphonit zu lösen vermögen oder mit dem geschmolzenen Phosphit bezw. Phosphonit ausreichend mischbar sind. Ausreichende Löslichkeit bezw. Mischbarkeit liegt beispielsweise dann vor, wenn das homogene flüssige Gemisch bis 15, vor allem bis 50 Gew.-% Phosphit bezw. Phosphonit enthalten kann. Als Lösungsmittel geeignet sind beispielsweise Alkohole oder Kohlenwasserstoffe oder deren Gemische.

Zweckmäßig wird als Lösungsmittel in der Schmelze eine Verbindung oder ein Gemisch zweier Verbindungen verwendet. Dabei wird das Hauptlösungsmittel in einer Menge von 20 bis 500 Gew.-% bezogen auf Phosphit bezw. Phosphonit, und das weitere Lösungsmittel in einer Menge von 0-50 Gew.-% bezogen auf das Hauptlösungsmittel eingesetzt. Vorzugsweise enthält die Schmelze als Hauptlösungsmittel einen Alkohol oder einen Kohlenwasserstoff in einer Menge von 20 bis 500 Gew.-% bezogen auf Phosphit bezw. Phosphonit, und ein weiteres Lösungsmittel in einer Menge von 0-50, vor allem 0-20 Gew.-%, bezogen auf das Hauptlösungsmittel.
Möglich ist auch der Einsatz eines Gemisches von Alkoholen oder eines Gemisches von Kohlenwasserstoffen.

Geeignete Alkohole sind beispielsweise niedere Alkohole wie $C_1$-$C_5$-Alkanole, vor allem $C_1$-$C_3$-Alkanole wie Methanol, Ethanol, Propanol oder Isopropanol. Besonders geeignet sind Isopropanol und Methanol.
Geeignete Kohlenwasserstoffe sind beispielsweise $C_6$-$C_{13}$-Alkane, Cycloalkane oder alkylierte Cycloalkane mit 6 bis 12 Kohlenstoffatomen, Benzol, oder Alkylaromaten mit 6 bis 10 Kohlenstoffatomen; besonders geeignet sind Toluol, Ligroin, Petrolether, Xylol; vor allem Toluol.

Als weiteres Lösungsmittel wird häufig ein Kohlenwasserstoff oder ein Kohlenwasserstoffgemisch eingesetzt,

wenn das Hauptlösungsmittel ein Alkohol, oder ein Alkohol eingesetzt, wenn das Hauptlösungsmittel ein Kohlenwasserstoff ist. Geeignet sind dabei die oben aufgeführten Alkohole und Kohlenwasserstoffe.

Die einsetzbaren organischen Phosphite oder Phosphonite sind bei 20°C Feststoffe; im Allgemeinen sind es kristalline Feststoffe.

Unter Phosphiten sind hier organische Phosphite entsprechend der Formel $P(OR)_3$ zu verstehen, worin die Reste R Kohlenwasserstoffreste sind, welche Heteroatome enthalten können, und darüberhinaus maximal zwei der drei Reste R Wasserstoffatome darstellen können. Heteroatome sind alle Atome mit Ausnahme von Kohlenstoff und Wasserstoff, insbesondere die Atome N, O, F, Si, P, S, Cl, Br, Sn und I.

Phosphonite sind Ester der Phosphonigen Säure mit der Formel $P(OR)_2R$, worin R die oben angegebenen Bedeutungen hat oder Halogen bedeuten kann.

Im erfindungsgemäßen Verfahren können Rohphosphit- oder Rohphosphonitlösungen eingesetzt werden, wie sie bei der Herstellung vor der Kristallisation anfallen.

Das Produkt des erfmdungsgemäßen Verfahrens ist ein Stoffgemisch enthaltend festes Phosphit bezw. Phosphonit und Amin.

Vorzugsweise beträgt die Temperatur der Schmelze 55-90°C, vor allem 60-80°C.

Im erfindungsgemäßen Verfahren beträgt der Temperaturunterschied zwischen Schmelze und Kristallisationsmedium zweckmäßig mindestens 20°C, beispielsweise 30-70°C, vor allem 40-60°C.

Vorzugsweise wird das Kristallisationsmedium auf einer Temperatur gehalten, die mindestens 10°C, beispielsweise 10-60°C, unterhalb der resultierenden Liquidustemperatur liegt. Vorzugsweise liegt die Temperatur des Kristallisationsmediums 20-60°C unterhalb der resultierenden Liquidustemperatur.
Die resultierende Liquidustemperatur ist die Temperatur, bei der sich eine aus Schmelze und Kristallisationsmedium gebildete homogene Phase im thermodynamischen Gleichgewicht mit Phosphitkristallen befindet; unterhalb dieser Temperatur beginnt die Kristallisation, oberhalb bildet die Mischung eine homogene Schmelze. Diese Temperatur wird in der Praxis zweckmäßig durch Mischversuche ermittelt, beispielsweise mit Hilfe kalorimetrischer (z.B. der DSC) und/oder optischer Methoden.

Zweckmäßig werden als Kristallisationsmedium bezogen auf Phosphit bezw. Phosphonit in der Schmelze 80-800 Gew.-%, besonders 100-500 Gew.-%, organisches Lösungsmittel eingesetzt.

Als Kristallisationsmedium lassen sich vorteilhaft Alkohole verwenden; so werden beispielsweise ein $C_1$-$C_5$-Alkanol oder ein Gemisch verschiedener $C_1$-$C_5$-Alkanole eingesetzt. Vorzugsweise werden als Kristallisationsmedium $C_1$-$C_3$-Alkanole verwendet wie Methanol, Ethanol, Propanol oder Isopropanol.

Dem Kristallisationsmedium werden vorteilhaft Impfkristalle zugesetzt. Vorzugsweise besteht das Kristallisationsmedium daher aus einer Suspension von 2 bis 20 Gew.-% kristallinem Phosphit bezw. Phosphonit, bezogen auf Phosphit bezw. Phosphonit in der Schmelze. Darüberhinaus ist es vorteilhaft, wenn das Kristallisationsmedium zu 50-100 % mit dem Amin gesättigt ist, wobei 100 % Sättigung einer Aminkonzentration entsprechen, bei der gelöstes und festes Amin nebeneinander vorliegen können.

Im Allgemeinen enthält die Schmelze 0,1 bis 50 Gew.-% Amin bezogen auf Phosphit bezw. Phosphonit; vorzugsweise werden 0,2 bis 25 Gew.-%, vor allem 0,5 bis 20 Gew.-%, insbesondere 1 bis 10 Gew.-% eingesetzt (bezogen auf Phosphit bezw. Phosphonit in der Schmelze).

Während des Zudosierens der Schmelze wird das Kristallisationsmedium zweckmäßig gerührt. Nach der Vereinigung der beiden Mischungen kann die weitere Aufarbeitung in an sich bekannter Weise vorgenommen werden, z.B. durch Kühlen auf 10-15°C und Isolierung des kristallinen Produktes.

Das stabilisierte Phosphit bezw. Phosphonit wird im Allgemeinen als Pulver erhalten, worin das Amin homogen verteilt ist. Es enthält typischerweise 0,01 bis 20, besonders 0,05 bis 10, vor allem 0,1 bis 5 Gew.-% Amin (bezogen auf Phosphit bezw. Phosphonit).

Im erfindungsgemäßen Verfahren kommt als Amin vorzugsweise ein sterisch gehindertes Amin oder eines der Formel I

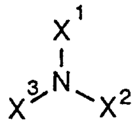

(I)

zum Einsatz, worin $X^1$ und $X^2$ unabhängig voneinander H, $C_1$-$C_{20}$-Alkyl, durch eine oder mehrere -O- unterbrochenes und optional durch ein oder mehrere Hydroxy-Gruppen substituiertes $C_4$-$C_{20}$-Alkyl, oder $C_2$-$C_{20}$-Hydroxyalkyl, und $X^3$ $C_2$-$C_{20}$-Alkyl, durch eine oder mehrere -O- unterbrochenes und optional durch ein oder mehrere Hydroxy-Gruppen substituiertes $C_4$-$C_{20}$-Alkyl, $-(CH_2)_m-NX^1X^2$, oder $C_2$-$C_{20}$-Hydroxyalkyl darstellen, oder worin $X^2$ und $X^3$ gemeinsam -

$(CH_2)_m$-, $-C_2H_4-O-C_2H_4-$ oder $-C_2H_4-NX^1-C_2H_4-$ darstellen, wobei m eine ganze Zahl aus dem Bereich 4 bis 6 ist und $X^1$ und $X^2$ die oben angegebenen Bedeutungen haben.

Bei dem sterisch gehinderten Amin handelt es sich allgemein um ein cyclisches sterisch gehindertes Amin, insbesondere eine Verbindung aus der Reihe der Derivate von Polyal-kylpiperidinen oder -piperazinen, die mindestens eine Gruppe der Formeln II oder III

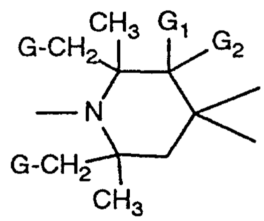

(II)

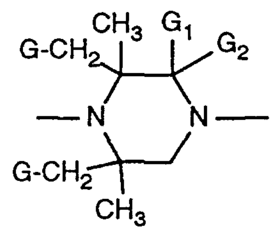

(III)

enthalten, worin G Wasserstoff oder Methyl ist und $G_1$ und $G_2$ Wasserstoff, Methyl oder gemeinsam =O bedeuten; vorzugsweise sind die Polyalkylpiperidingruppen der Formel II oder III in 4-Stellung mit einem oder zwei polaren Substituenten oder einen polaren Spiro-Ringsystem substituiert.

$X^1$, $X^2$ und $X^3$ bedeuten beispielsweise, unabhängig voneinander, Ethyl, Propyl, Butyl, Pentyl, Hexyl, Heptyl, Octyl, Nonyl, Decyl, Hydroxyethyl, Hydroxypropyl, Hydroxybutyl, Hydroxypentyl, Hydroxyhexyl, Hydroxyheptyl, Hydroxyoctyl, Hydroxynonyl oder Hydroxydecyl.

Vorzugsweise sind $X^1$, $X^2$ und $X^3$ gleich.

Vorzugsweise ist das Amin der Formel I ein tertiäres Amin, besonders bevorzugt ein Tri-$C_2$-$C_4$-alkanolamin, vor allem Triisopropanolamin (= Amin A).

Von Bedeutung ist ein Verfahren, worin als Amin ein tertiäres Amin der Formel I oder ein cyclisches sterisch gehindertes Amin eingesetzt wird, das mindestens eine Gruppe der Formeln II oder III enthält, worin G Wasserstoff ist und $G^1$ und $G^2$ Wasserstoff oder gemeinsam einen Substituenten =O bedeuten.

Besonders zweckmäßig werden im erfindungsgemäßen Verfahren Derivate des 2,2,6,6-Tetramethylpiperidins eingesetzt.

Von Bedeutung ist insbesondere die Verwendung der im folgenden unter (a) bis (h) beschriebenen Klassen von Polyalkylpiperidinen, die mindestens eine Gruppe der Formel II oder III, wie oben angegeben, tragen:

(a) Verbindungen der Formel IV

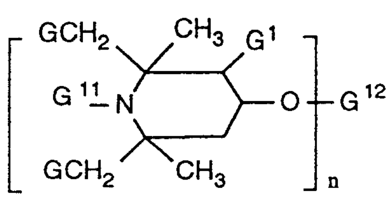

(IV),

worin n eine Zahl von 1 bis 4 bedeutet, G und $G^1$ unabhängig voneinander Wasserstoff oder Methyl bedeuten,

$G^{11}$ Wasserstoff, Oxyl, Hydroxyl, $C_1$-$C_{18}$-Alkyl, $C_3$-$C_8$-Alkenyl, $C_3$-$C_8$-Alkinyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_1$-$C_8$-Alkanoyl, $C_3$-$C_5$-Alkenoyl, $C_1$-$C_{18}$-Alkanoyloxy, Benzyloxy, Glycidyl oder eine Gruppe $-CH_2CH(OH)-Z$, worin Z Wasserstoff, Methyl oder Phenyl ist, bedeutet, wobei $G^{11}$ vorzugsweise

H, $C_1$-$C_4$-Alkyl, Allyl, Benzyl, Acetyl oder Acryloyl ist und
$G^{12}$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wobei die Carbonsäure jeweils im aliphatischen, cycloaliphatischen oder aromatischen Teil mit 1 bis 3 Gruppen -$COOZ^{12}$ substituiert sein kann, worin $Z^{12}$ H, $C_1$-$C_{20}$-Alkyl, $C_3$-$C_{12}$-Alkenyl, $C_5$-$C_7$-Cycloalkyl, Phenyl oder Benzyl ist,
wenn n 2 ist, $C_2$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wobei die Dicarbonsäure jeweils im aliphatischen, cycloaliphatischen oder aromatischen Teil mit 1 oder 2 Gruppen -$COOZ^{12}$ substituiert sein kann, wenn n 3 ist, einen dreiwertigen Rest einer aliphatischen, cycloaliphatischen oder aromatischen Tricarbonsäure, der im aliphatischen, cycloaliphatischen oder aromatischen Teil mit -$COOZ^{12}$ substituiert sein kann, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Unter den angegebenen Carbonsäureresten sind dabei jeweils Reste der Formel $(-CO)_nR$, wobei die Bedeutung von n oben angegeben ist, und sich die Bedeutung von R aus der angegebenenen Definition ergibt.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $G^{11}$ oder $G^{12}$ z.B. die oben angeführten Gruppen und dazu noch beispielsweise n-Tridecyl, n-Tetradecyl, n-Hexadecyl oder n-Octadecyl darstellen.

Wenn $G^{11}$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$G^{11}$ ist als $C_3$-$C_8$-Alkinyl bevorzugt Propargyl.

Als $C_7$-$C_{12}$-Aralkyl ist $G^{11}$ insbesondere Phenethyl und vor allem Benzyl.

$G^{11}$ ist als $C_1$-$C_8$-Alkanoyl beispielsweise Formyl, Propionyl, Butyryl, Octanoyl, aber bevorzugt Acetyl und als $C_3$-$C_5$-Alkenoyl insbesondere Acryloyl.

Bedeutet $G^{12}$ einen einwertigen Rest einer Carbonsäure, so stellt es beispielsweise einen Essigsäure-, Capronsäure-, Stearinsäure-, Acryl-säure-, Methacrylsäure-, Benzoe- oder $\beta$-(3,5-Di-tert.-butyl-4-hydroxy- phenyl)-propionsäurerest dar.

Bedeutet $G^{12}$ einen einwertigen Silylrest, so stellt es beispielsweise einen Rest der Formel $-(C_jH_{2j})-Si(Z')_2Z''$ dar, worin j eine ganze Zahl aus dem Bereich von 2 bis 5, und Z' und Z'' unabhängig voneinander $C_1$-$C_4$-Alkyl oder $C_1$-$C_4$-Alkoxy bedeuten.

Bedeutet $G^{12}$ einen zweiwertigen Rest einer Dicarbonsäure, so stellt es beispielsweise einen Malonsäure-, Bernsteinsäure-, Glutarsäure-, Adipin- säure-, Korksäure-, Sebacinsäure-, Maleinsäure-, Itaconsäure-, Phthal-säure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $G^{12}$ einen dreiwertigen Rest einer Tricarbonsäure dar, so bedeutet es z.B. einen Trimellitsäure-, Citronensäure- oder Nitrilotriessigsäurerest.

Stellt $G^{12}$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $G^{12}$ einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel IV, worin G Wasserstoff ist, $G^{11}$ Wasserstoff oder Methyl ist, n 2 ist und $G^{12}$ der Diacylrest einer aliphatischen Dicarbonsäure mit 4-12 C-Atomen ist.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin

6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1',6'-bis-(4-carbamoyloxy- 1-n-butyl-2,2,6,6-tetramethyl-piperidin)
27) Toluol-2',4'-bis-(4-carbamoyloxy-1-n-propyl-2,2,6,6-tetramethyl-piperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat
33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

(b) Verbindungen der Formel (V)

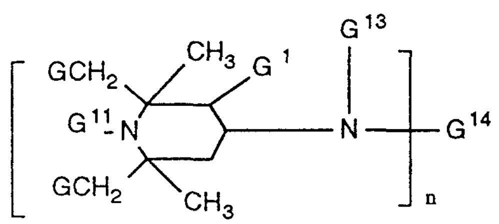

(V)

worin n die Zahl 1 oder 2 bedeutet, G, $G^1$ und $G^{11}$ die unter (a) angegebene Bedeutung haben,
$G^{13}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-Alkenoyl, Benzoyl oder eine Gruppe der Formel

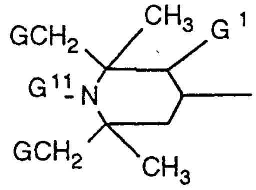

ist und

$G^{14}$, wenn n 1 ist, Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel $-CH_2-CH(OH)-Z$ oder der Formel -CONH-Z ist, worin Z Wasserstoff, Methyl oder Phenyl bedeutet;
wenn n 2 ist, $C_2$-$C_{12}$-Alkylen, $C_6$-$C_{12}$-Arylen, Xylylen, eine $-CH_2-CH(OH)-CH_2$-Gruppe oder eine Gruppe $-CH_2-CH(OH)-CH_2-O-D-O-$ bedeutet, worin D $C_2$-$C_{10}$-Alkylen, $C_6$-$C_{15}$-Arylen, $C_6$-$C_{12}$-Cycloalkylen ist, oder vorausgesetzt, daß $G^{13}$ nicht Alkanoyl, Alkenoyl oder Benzoyl bedeutet, $G^{14}$ auch 1-Oxo-$C_2$-$C_{12}$-alkylen, einen zweiwertigen Rest einer aliphatischen, cycloaliphatischen oder aromatischen Dicarbonsäure oder Dicarbaminsäure oder auch die Gruppe -CO- bedeuten kann, oder,
wenn n 1 ist, $G^{13}$ und $G^{14}$ zusammen den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter (a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $G^{13}$ insbesondere Phenylethyl oder vor allem Benzyl. Als $C_2$-$C_5$-Hydroxyalkyl ist $G^{13}$ insbesondere 2-Hydroxyethyl oder 2-Hydroxypropyl.

$G^{13}$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $G^{14}$ $C_2$-$C_8$-Alkenyl, dann handelt es sich z.B. um Allyl, Methallyl, 2-Butenyl, 2-Pentenyl, 2-Hexenyl oder 2-Octenyl.

$G^{14}$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist insbesondere Cyclohexylen zu nennen.

Bevorzugt sind Verbindungen der Formel V, worin n 1 oder 2 ist, G Wasserstoff ist, $G^{11}$ Wasserstoff oder Methyl ist, $G^{13}$ Wasserstoff, $C_1$-$C_{12}$-Alkyl oder eine Gruppe der Formel

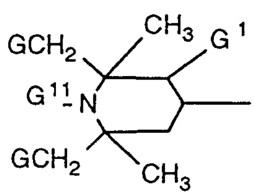

ist und $G^{14}$ im Fall von n=1 Wasserstoff oder $C_1$-$C_{12}$-Alkyl ist, und im Fall von n=2 $C_2$-$C_8$-Alkylen oder 1-Oxo-$C_2$-$C_8$-alkylen ist.

Beispiele für Polyalkylpiperidin-Verbindungen dieser Klasse sind folgende Verbindungen:

37) N,N'-Bis-(2,2,6,6-tetramethylpiperidin-4-yl)-hexamethylen-1,6-diamin
38) N,N'-Bis-(2,2,6,6-tetramethylpiperidin-4-yl)-hexamethylen-1,6-di-acetamid
39) Bis-(2,2,6,6-tetramethylpiperidin-4-yl)-amin
40) 4-Benzoylamino-2,2,6,6-tetramethylpiperidin
41) N,N'-Bis-(2,2,6,6-tetramethylpiperidin-4-yl)-N,N'-dibutyl-adipamid
42) N,N'-Bis-(2,2,6,6-tetramethylpiperidin-4-yl)-N,N'-dicyclohexyl-2-hydroxypropylen-1,3-diamin
43) N,N'-Bis-(2,2,6,6-tetramethylpiperidin-4-yl)-p-xylylen-diamin
44) N,N'-Bis-(2,2,6,6-tetramethylpiperidin-4-yl)-succindiamid
45) N-(2,2,6,6-Tetramethylpiperidin-4-yl)-β-aminodipropionsäure-di-(2,2,6,6-tetramethylpiperidin-4-yl)-ester
46) Die Verbindung der Formel

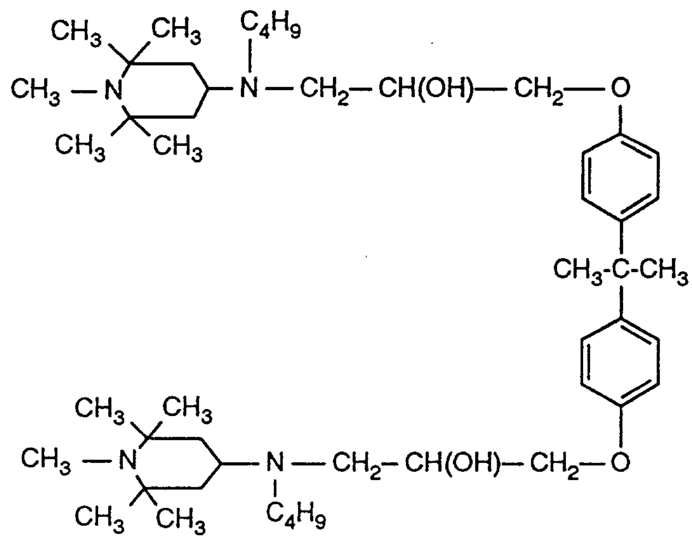

47) 4-(Bis-2-hydroxyethyl-amino)-1,2,2,6,6-pentamethylpiperidin
48) 4-(3-Methyl-4-hydroxy-5-tert.-butyl-benzoesäureamido)-2,2,6,6-tetra-methylpiperidin
49) 4-Methacrylamido-1,2,2,6,6-pentamethylpiperidin

(c) Verbindungen der Formel (VI)

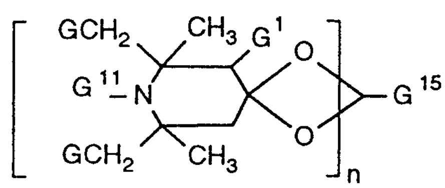

(VI)

worin n die Zahl 1 oder 2 bedeutet, G, $G^1$ und $G^{11}$ die unter (a) angegebene Bedeutung haben und $G^{15}$, wenn n 1 ist, $C_2$-$C_8$-Alkylen oder -Hydroxyalkylen oder $C_4$-$C_{22}$-Acyloxyalkylen, wenn n 2 ist, die Gruppe $(-CH_2)_2C(CH_2-)_2$ bedeutet.
Bedeutet $G^{15}$ $C_2$-$C_8$-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.
Als $C_4$-$C_{22}$-Acyloxyalkylen bedeutet $G^{15}$ z.B. 2-Ethyl-2-acetoxymethylpropylen.
Beispiele für Polyalkylpiperidin-Verbindungen dieser Klasse sind folgende Verbindungen:

50) 9-Aza-8,8,10,10-tetramethyl-1,5-dioxaspiro[5.5]undecan
51) 9-Aza-8,8,10,10-tetramethyl-3-ethyl-1,5-dioxaspiro[5.5]undecan
52) 8-Aza-2,7,7,8,9,9-hexamethyl-1,4-dioxaspiro[4.5]decan
53) 9-Aza-3-hydroxymethyl-3-ethyl-8,8,9,10,10-pentamethyl-1,5-dioxaspiro[5.5]undecan
54) 9-Aza-3-ethyl-3-acetoxymethyl-9-acetyl-8,8,10,10-tetramethyl-1,5-dioxaspiro[5.5]undecan
55) 2,2,6,6-Tetramethylpiperidin-4-spiro-2'-(1',3'-dioxan)-5'-spiro-5''-(1'',3''-dioxan)-2''-spiro-4'''-(2''',2''',6''',6'''-tetramethylpiperidin).

(d) Verbindungen der Formeln VIIA, VIIB und VIIC, wobei Verbindungen der Formel VIIC bevorzugt sind,

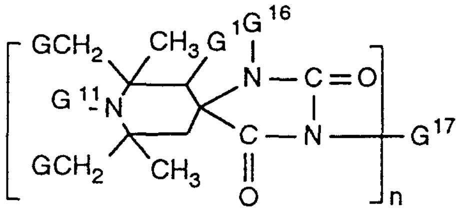

(VIIA)

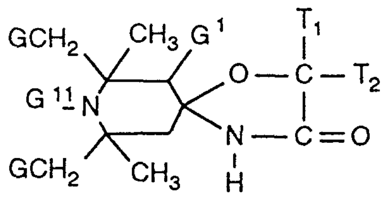

(VIIB)

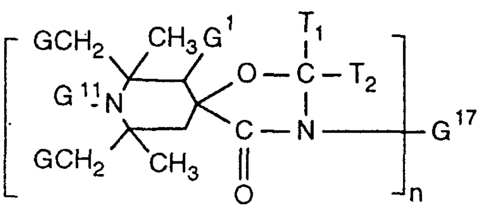

(VIIC)

worin n die Zahl 1 oder 2 bedeutet, G, $G^1$ und $G^{11}$ die unter (a) angegebene Bedeutung haben,

$G^{16}$ Wasserstoff, $C_1$-$C_{12}$-Alkyl, Allyl, Benzyl, Glycidyl oder $C_2$-$C_6$-Alkoxyalkyl ist und

$G^{17}$, wenn n 1 ist, Wasserstoff, $C_1$-$C_{12}$-Alkyl, $C_3$-$C_5$-Alkenyl, $C_7$-$C_9$-Aralkyl, $C_5$-$C_7$ Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)p-COO-Q$ oder der Formel $-(CH_2)p-O-CO-Q$ ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2-CH(OH)-CH_2-O-D-O-CH_2-CH(OH)-CH_2-$, worin D $C_2$-$C_{10}$ Alkylen, $C_6$-$C_{15}$-Arylen, $C_6$-$C_{12}$ Cycloalkylen ist, oder eine Gruppe $-CH_2CH(OZ')CH_2-(OCH_2-CH(OZ')CH_2)_2-$ bedeutet, worin Z' Wasserstoff, $C_1$-$C_{18}$-Alkyl, Allyl, Benzyl, $C_2$-$C_{12}$-Alkanoyl oder Benzoyl ist,

$T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder $T_1$ und $T_2$ zusammen mit dem sie bindenden C-Atom einen $C_5$-$C_{14}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $G^{17}$ $C_3$-$C_5$-Alkenyl dar, so bedeutet es z.B. 1-Propenyl, Allyl, Methallyl, 2-Butenyl oder 2-Pentenyl.

Als $C_7$-$C_9$-Aralkyl sind $G^{17}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $G^{17}$ $C_2$-$C_4$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $G^{17}$, $T_1$ und $T_2$ insbesondere Phenyl, α- oder β-Naphthyl, die gegebenenfalls mit Halogen oder $C_1$-$C_4$-Alkyl substituiert sind.

Stellt $G^{17}$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$-Alkenylen bedeutet $G^{17}$ insbesondere 2-Butenylen, 2-Pentenylen oder 3-Hexenylen.
Bedeutet $G^{17}$ $C_6$-$C_{12}$ Arylen, so stellt es beispielsweise o-, m- oder p-Phenylen, 1,4-Naphthylen oder 4,4'-Diphenylen dar.
Bedeutet Z' $C_2$-$C_{12}$ Alkanoyl, so stellt es beispielsweise Propionyl, Butyryl, Octanoyl, Dodecanoyl, aber bevorzugt Acetyl dar.
D hat als $C_2$-$C_{10}$ Alkylen, $C_6$-$C_{15}$ Arylen oder $C_6$-$C_{12}$ Cycloalkylen die unter (b) angegebene Bedeutung.
Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion
57) 3-n-Octyl-1,3,8-triaza-7,7,9,9-tetramethylspiro[4.5]decan-2,4-dion
58) 3-Allyl-1,3,8-triaza-1,7,7,9,9-pentamethylspiro[4.5]decan-2,4-dion
59) 3-Glycidyl-1,3,8-triaza-7,7,8,9,9-pentamethylspiro[4.5]decan-2,4-dion
60) 1,3,7,7,8,9,9-Heptamethyl-1,3,8-triazaspiro[4.5]decan-2,4-dion
61) 2-Iso-pröpyl-7,7,9,9-tetramethyl-1-oxa-3,8-diaza-4-oxo-spiro- [4.5]decan
62) 2,2-Dibutyl-7,7,9,9-tetramethyl-1-oxa-3,8-diaza-4-oxo-spiro-[4.5]-decan
63) 2,2,4,4-Tetramethyl-7-oxa-3,20-diaza-21-oxo-dispiro[5.1.11.2]-heneicosan
64) 2-Butyl-7,7,9,9-tetramethyl-1-oxa-4,8-diaza-3-oxo-spiro-[4,5]decan
und bevorzugt:
65) 8-Acetyl-3-dodecyl-1,3,8-triaza-7,7,9,9-tetramethylspiro[4,5]-decan-2,4-dion
oder die Verbindungen der folgenden Formeln:

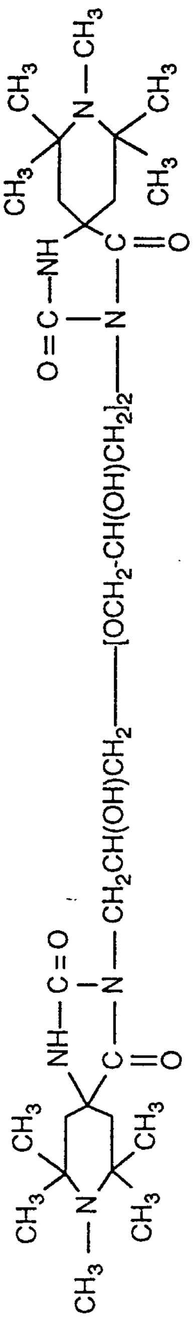

66)

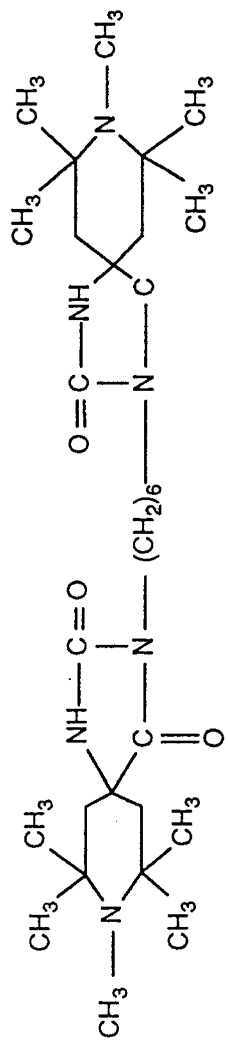

67)

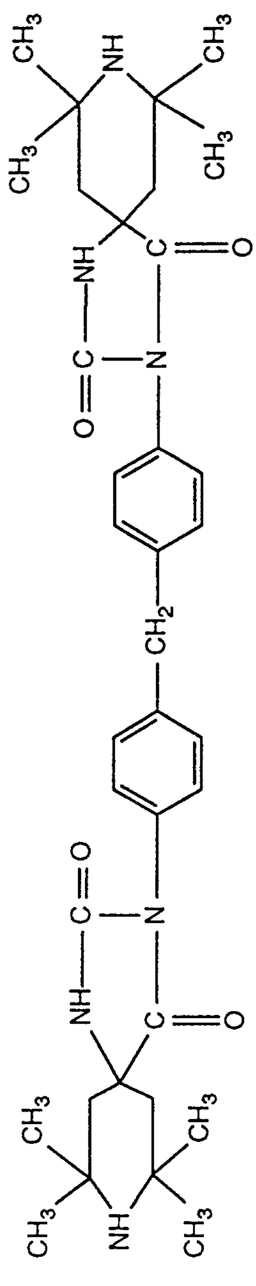

68)

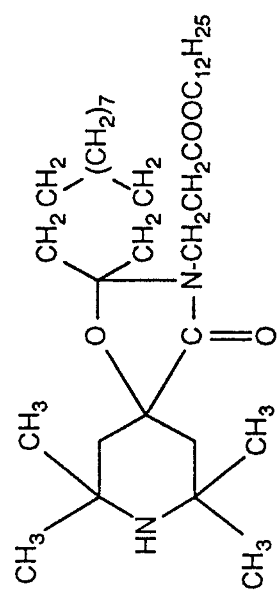

69)

(e) Verbindungen der Formel VIII, die ihrerseits bevorzugt sind,

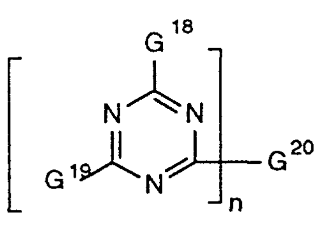

(VIII),

worin n die Zahl 1 oder 2 ist und $G^{18}$ eine Gruppe einer der Formeln

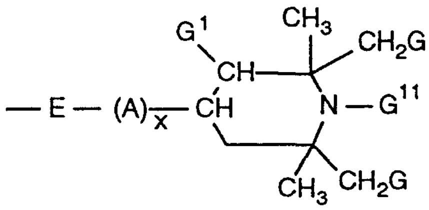

oder

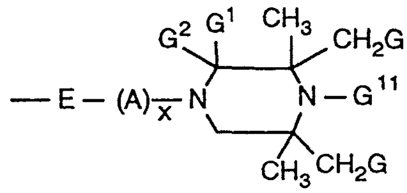

bedeutet, worin G und $G^{11}$ die unter (a) angegebene Bedeutung haben und $G^1$ und $G^2$ Wasserstoff, Methyl oder gemeinsam einen Substituenten =O bedeuten,

E -O- oder $-NG^{13}-$ ist, A $C_2$-$C_6$-Alkylen oder $-(CH_2)_3-O-$ und x eine der Zahlen O oder 1 bedeuten,
$G^{13}$ Wasserstoff, $C_1$-$C_{12}$-Alkyl, $C_2$-$C_5$-Hydroxyalkyl oder $C_5$-$C_7$-Cycloalkyl darstellt, $G^{19}$ gleich $G^{18}$ oder eine der Gruppen $-NG^{21}G^{22}$, $-OG^{23}$, $-NHCH_2OG^{23}$ oder $-N(CH_2OG^{23})_2$ ist,
$G^{20}$, wenn n = 1 ist, gleich $G^{18}$ oder $G^{19}$, und wenn n = 2 ist, eine Gruppe -E-B-E- ist, worin B $C_2$-$C_8$-Alkylen oder durch 1 oder 2 Gruppen $-N(G^{21})-$ unterbrochenes $C_2$-$C_8$-Alkylen bedeutet,
$G^{21}$ $C_1$-$C_{12}$-Alkyl, Cyclohexyl, Benzyl oder $C_1$-$C_4$-Hydroxyalkyl oder eine Gruppe der Formel

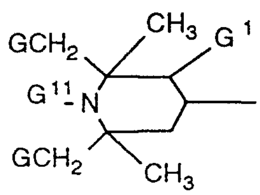

ist, $G^{22}$ $C_1$-$C_{12}$ Alkyl, Cyclohexyl, Benzyl, $C_1$-$C_4$ Hydroxyalkyl und $G^{23}$ Wasserstoff, $C_1$-$C_{12}$ Alkyl oder Phenyl bedeuten oder $G^{21}$ und $G^{22}$ zusammen $C_4$-$C_5$-Alkylen oder -Oxaalkylen, beispielsweise

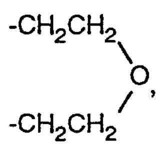,

oder eine Gruppe der Formel

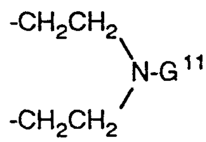

sind, oder $G^{21}$ eine Gruppe der Formel

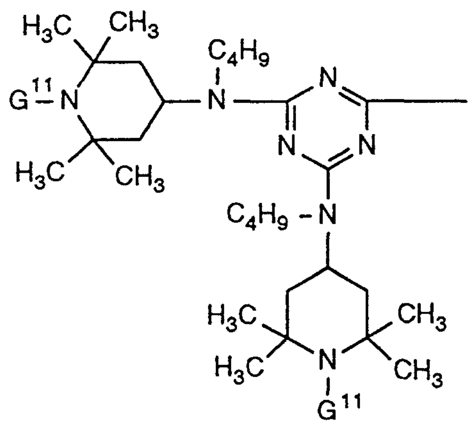

bedeutet.

Bedeuten etwaige Substituenten $C_1$-$C_{12}$-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$ Alkylen, so stellt es beispielsweise Ethylen, Propylen, 2,2-Dimethylpropylen, Tetramethylen oder Hexamethylen dar.

Stellen $G^{21}$ und $G^{22}$ zusammen $C_4$-$C_5$-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

70)

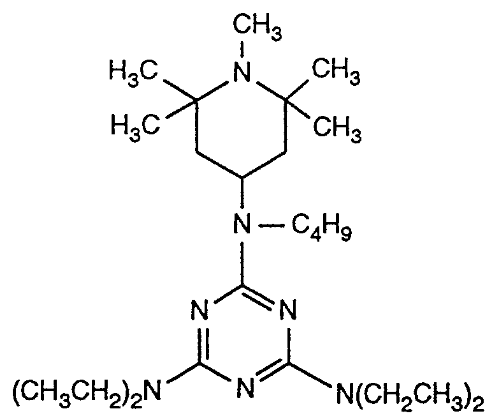

71)

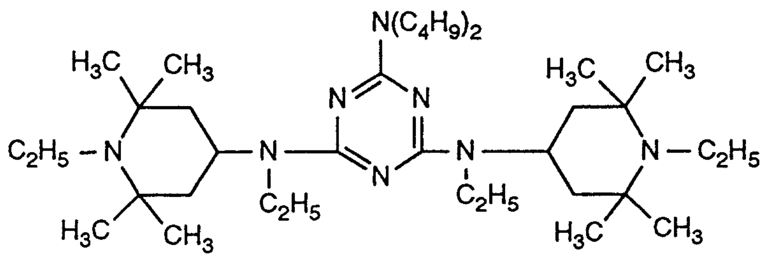

72) 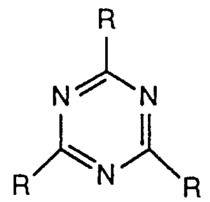 mit 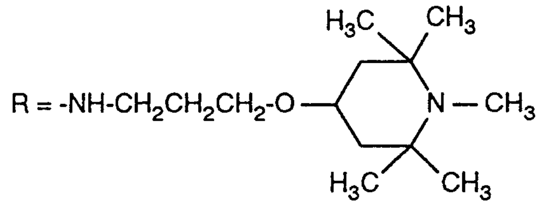

73) 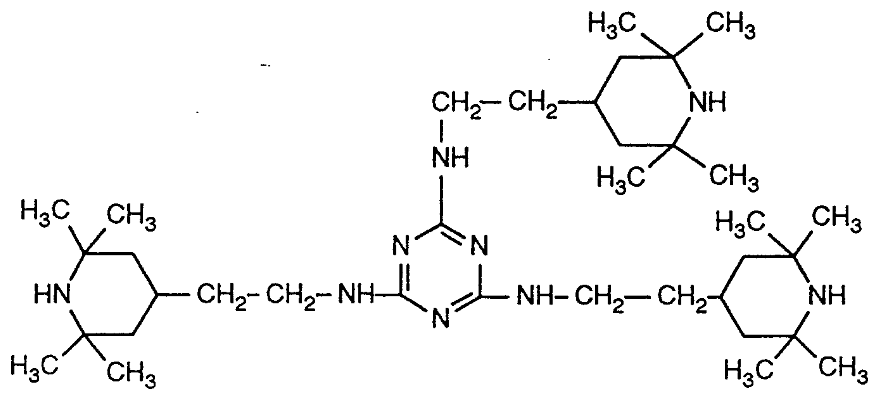

74) 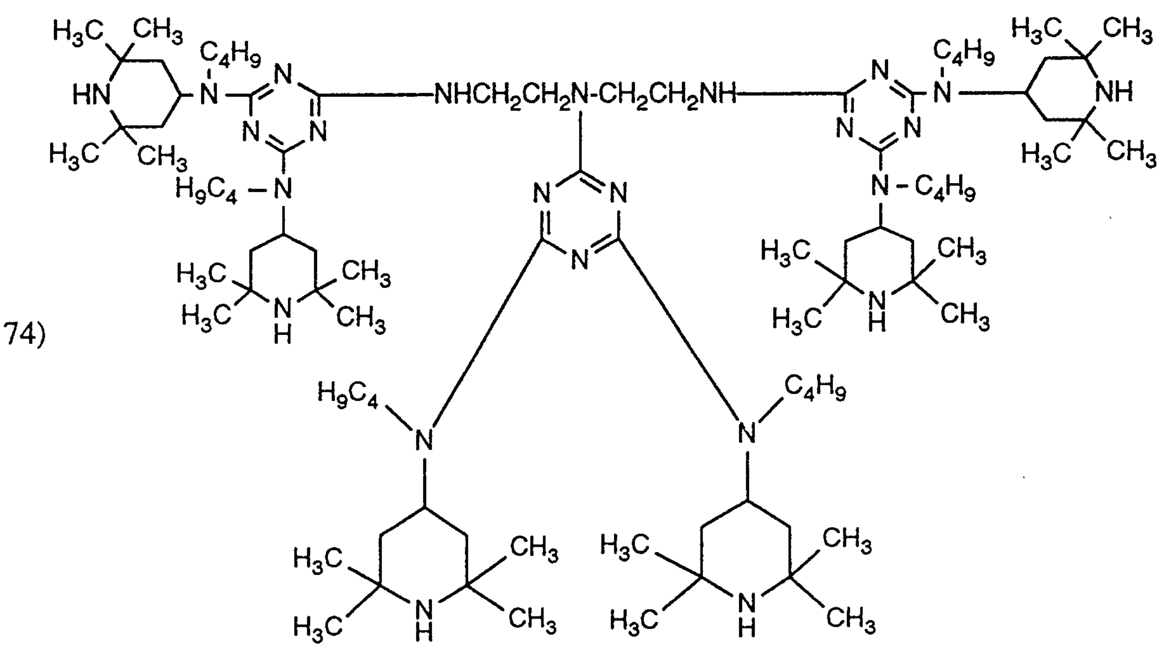

75) 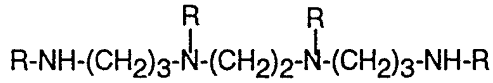

mit R = 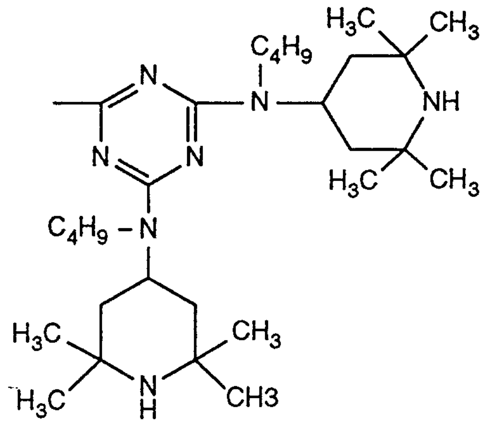

76) 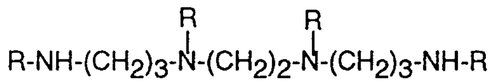 (Amin J)

mit R = 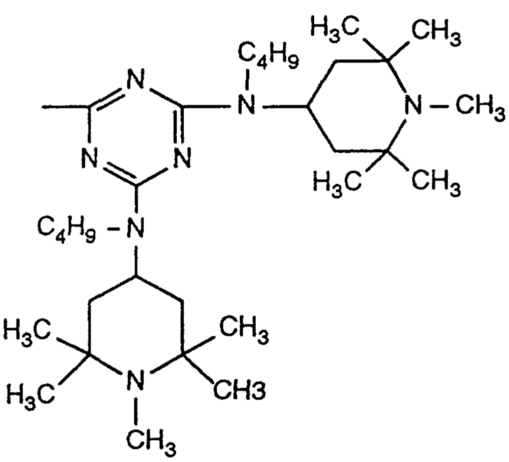

77) 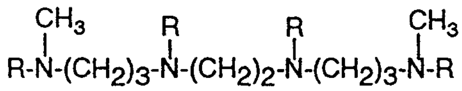

mit R = 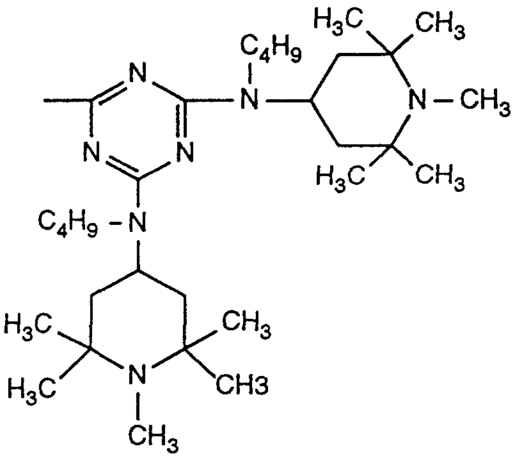

78) 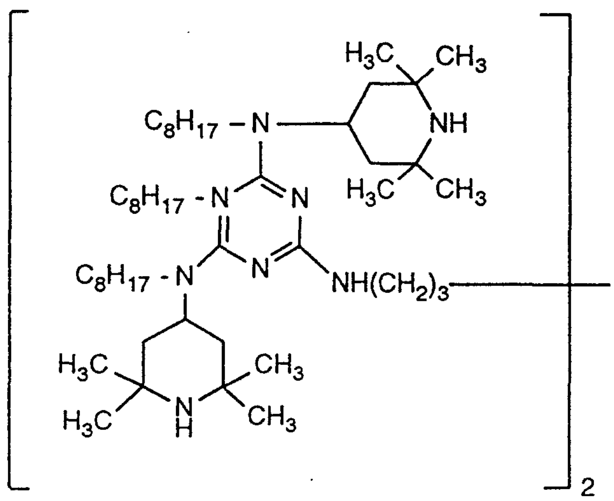

79) 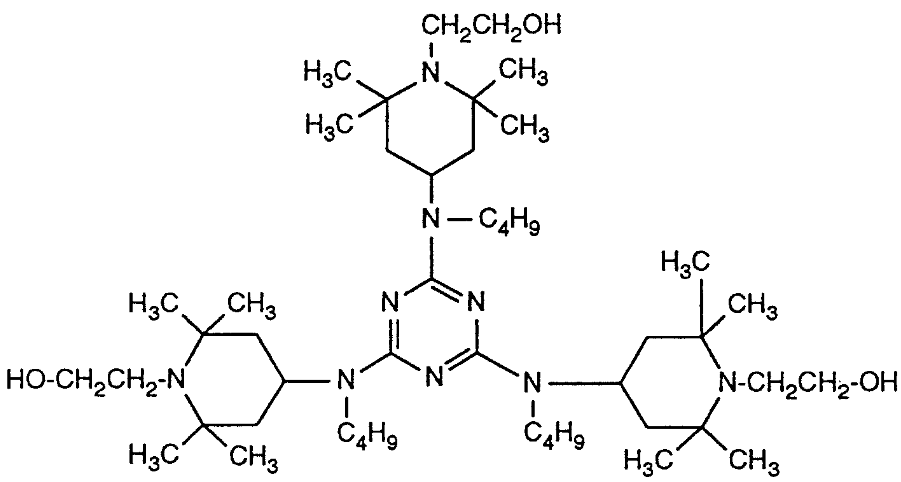

(80)

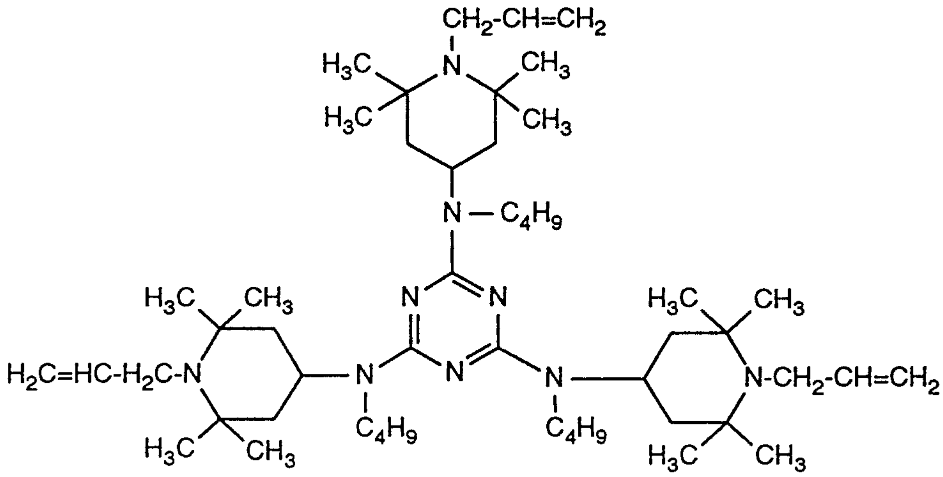

(f) Oligomere oder polymere Verbindungen, deren wiederkehrende Struktureinheit einen 2,2,6,6-Tetraalkylpiperidinrest der Formel III enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

(81)

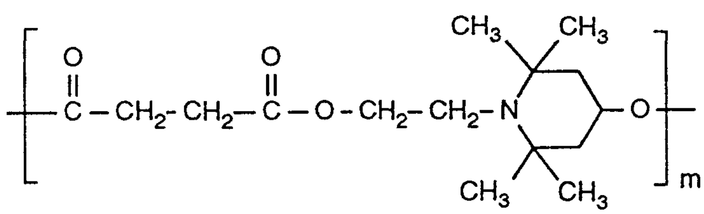

82)

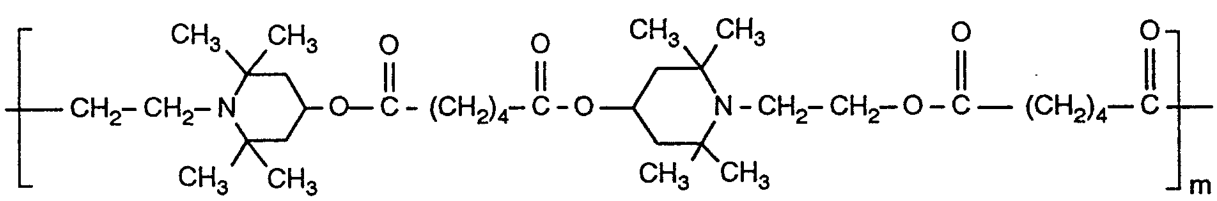

83)

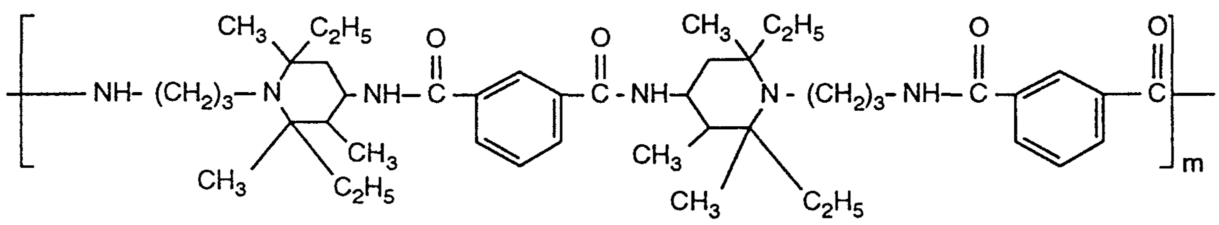

(84)

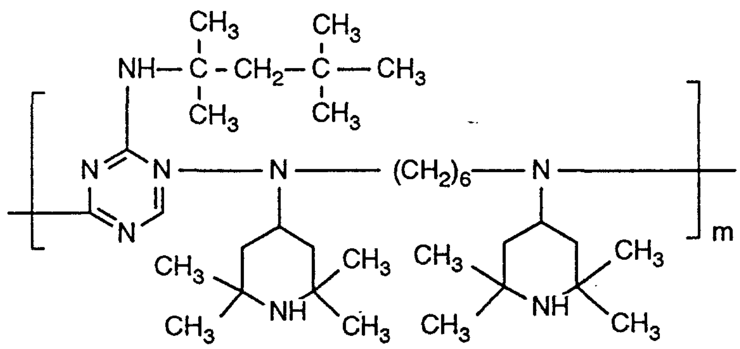

(85)

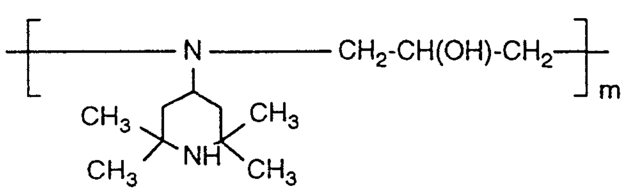

(86)

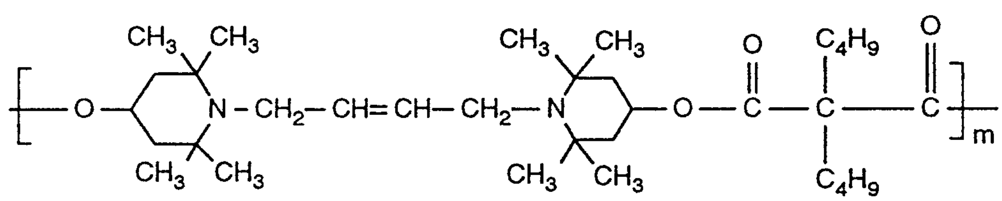

(87)

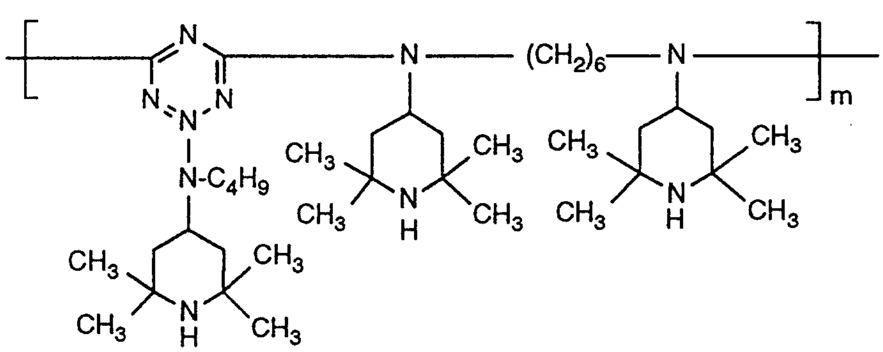

(88) 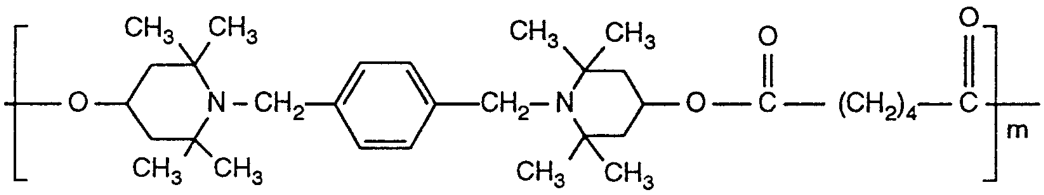

(89) 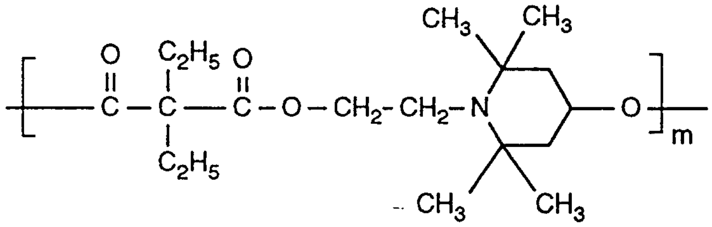

90) 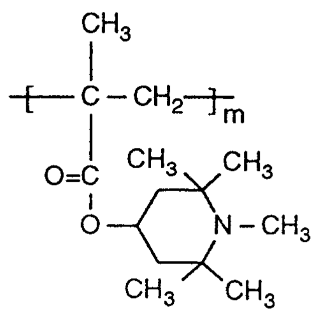

91) 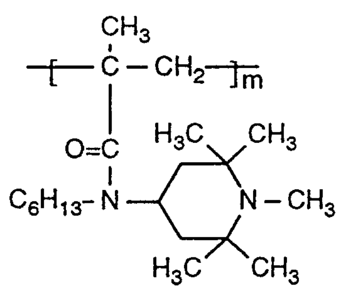

92) 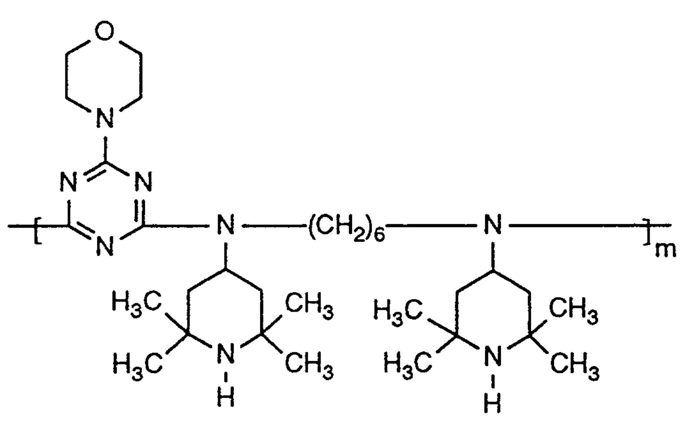

93) 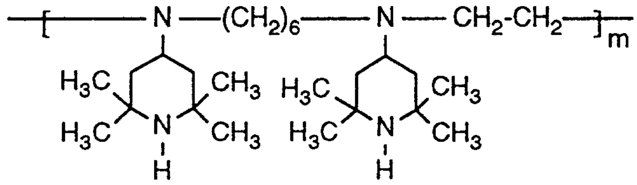

94) 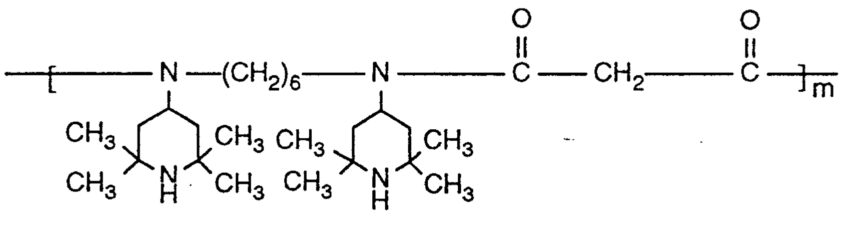

95) 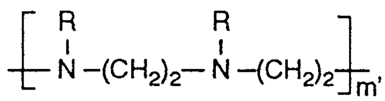

wobei R = 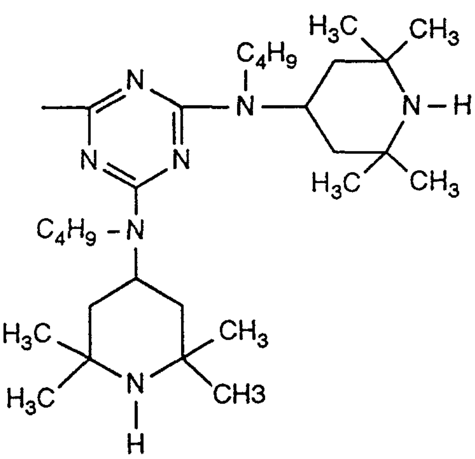 ist oder für

eine Verzweigung der Kette 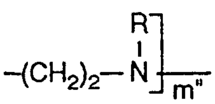 steht, m' und m" jeweils eine ganze Zahl aus dem Bereich 0-200 bedeuten mit der Bedingung m' + m" = m.

Weitere Beispiele für polymere Lichtschutzmittel sind Umsetzungsprodukte von Verbindungen der Formel

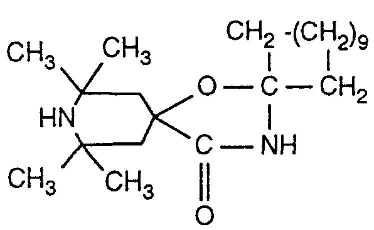

mit Epichlorhydrin;
Polyester aus Butan-1,2,3,4-tetracarbonsäure mit einem bifunktionellen Alkohol der Formel

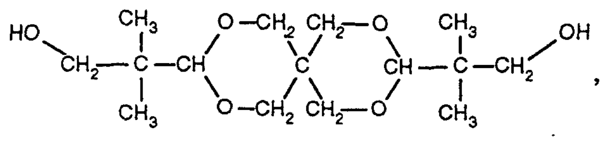
,

dessen von der Tetracarbonsäure stammenden Carboxyl-Seitenketten mit 2,2,6,6-Tetramethyl-4-hydroxy-piperidin verestert sind;
Verbindungen der Formel

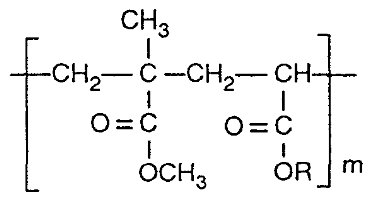

wobei ca. ein Drittel der Reste R die Bedeutung $-C_2H_5$ haben und die anderen

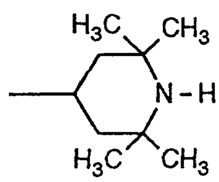

bedeuten und m eine Zahl aus dem Bereich von 2 bis 200 ist; oder
Copolymerisate, deren Wiederkehrende Einheit aus 2 Einheiten

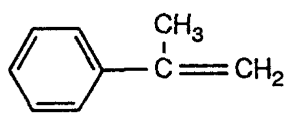

und jeweils 1 Einheit

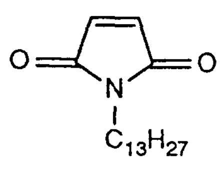 und 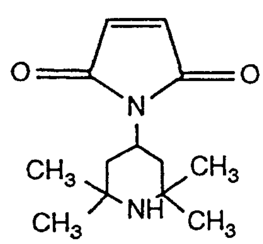

aufgebaut ist.

(g) Verbindungen der Formel IX

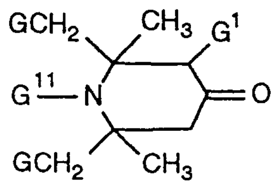

(IX)

worin G, $G^1$ und $G^{11}$ die unter (a) angegebene Bedeutung haben.

Bevorzugt sind Verbindungen der Formel IX, worin G Wasserstoff oder Methyl ist und $G^{11}$ Wasserstoff oder Methyl ist.

Beispiele für solche Verbindungen sind:

96) 2,2,6,6-Tetramethyl-4-piperidon (Triacetonamin)
97) 1,2,2,6,6-Pentamethyl-4-piperidon
98) 2,2,6,6-Tetramethyl-4-piperidon-1-oxyl
99) 2,3,6-Trimethyl-2,6-diethyl-4-piperidon

(h) Verbindungen der Formel X

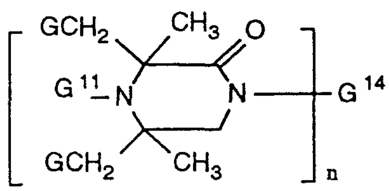

(X)

worin n die Zahl 1 oder 2 bedeutet und worin G und $G^{11}$ die unter (a), und $G^{14}$ die unter (b) angegebene Bedeutung haben, wobei für $G^{14}$ die Bedeutungen $-CONH-Z$ und $-CH_2-CH(OH)-CH_2-O-D-O-$ ausgeschlossen sind.

Beispiele für solche Verbindungen sind:

100) 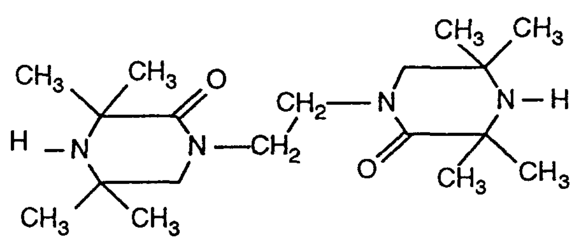 (Amin M)

101) 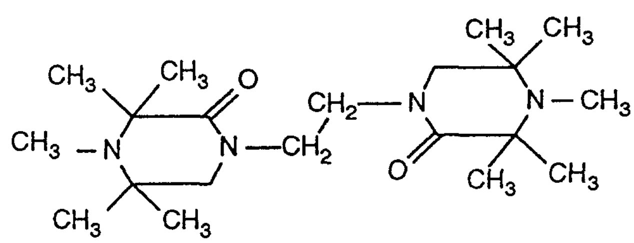

102) 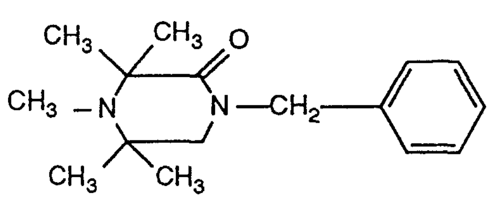

Besonders bevorzugt zur Verwendung im erfindungsgemäßen Verfahren sind die folgenden Amine:

Verbindungen der Formel IV, worin n eine ganze Zahl aus dem Bereich von 1 bis 4 bedeutet, G und $G^1$ Wasserstoff sind und
$G^{11}$ Wasserstoff oder $C_1$-$C_{18}$-Alkyl und
$G^{12}$, wenn n = 1 ist, einen Rest der Formel $-(C_jH_{2j})-Si(Z')_2Z''$, worin j eine ganze Zahl aus dem Bereich von 2 bis 5, und Z' und Z'' unabhängig voneinander $C_1$-$C_4$-Alkyl oder $C_1$-$C_4$-Alkoxy bedeuten, darstellt und
$G^{12}$, wenn n = 2 ist, einen Rest einer aliphatischen Dicarbonsäure mit 2 bis 12 C-Atomen, der durch $-COOZ^{12}$ substituiert sein kann, wobei $Z^{12}$ $C_1$-$C_{20}$-Alkyl ist,
$G^{12}$, wenn n = 3 ist, einen Rest einer aromatischen Tricarbonsäure mit 9 bis 15 C-Atomen,
$G^{12}$, wenn n = 4 ist, einen Rest einer aliphatischen Tetracarbonsäure mit 8 bis 12 C-Atomen darstellt; Amine von besonderem technischem Interesse aus dieser Klasse sind solche der Formeln

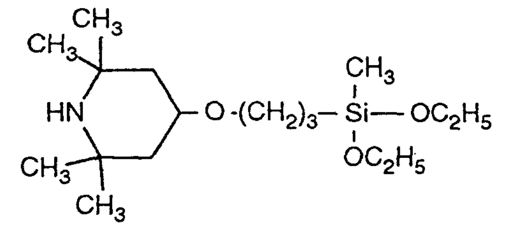

(Amin B),

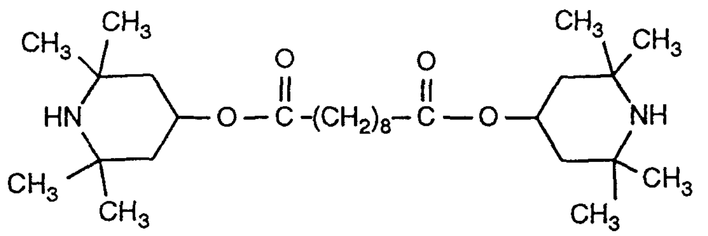

(Amin C),

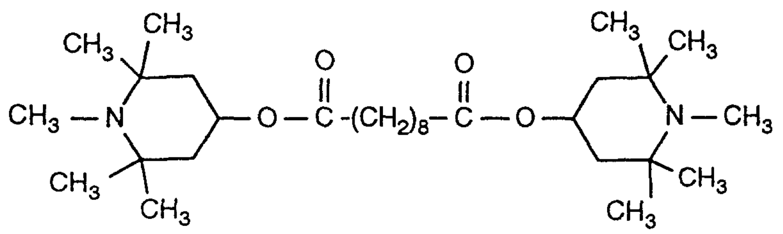

(Amin D),

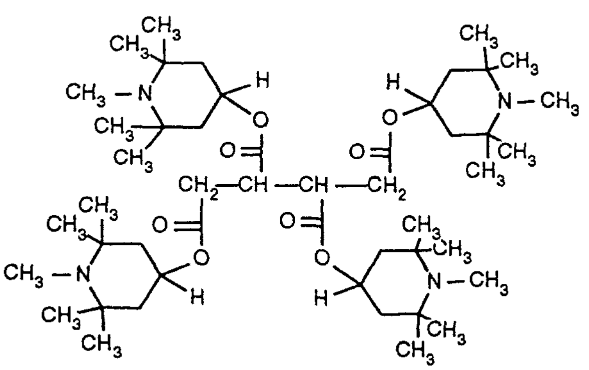

(Amin E),

sowie Ester der Butan-1,2,3,4-tetracarbonsäure mit je 2 Einheiten 1,2,2,6,6-Pentamethyl-4-hydroxy-piperidin und $C_{13}H_{27}$-OH (Amin F);

Verbindungen der Formel V, worin n 2 ist, G und $G^1$ Wasserstoff sind,

$G^{11}$ Wasserstoff oder Methyl und
$G^{13}$ Wasserstoff oder $C_1$-$C_8$-Alkyl bedeuten, und
$G^{14}$ $C_2$-$C_8$-Alkylen oder 1-Oxo-$C_2$-$C_8$-alkylen ist; ein Amin von besonderem technischem

Interesse aus dieser Klasse ist die Verbindung der Formel

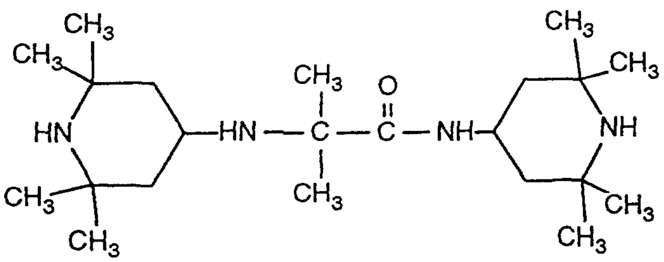

(Amin G);

Verbindungen der Formel VIIC, worin n 1 ist, G,$G^1$ und $G^{17}$ Wasserstoff sind,

$G^{11}$ Wasserstoff oder Methyl bedeutet, und
$T_1$ und $T_2$ zusammen mit dem sie bindenden C-Atom einen $C_5$-$C_{14}$-Cycloalkanring bilden; ein Amin von besonderem technischem Interesse aus dieser Klasse ist die Verbindung der Formel

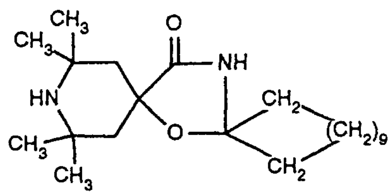

(Amin H);
Verbindungen der Formel VIII, worin n 1 oder 2 ist,
$G^{18}$ und $G^{19}$ eine Gruppe einer der Formeln

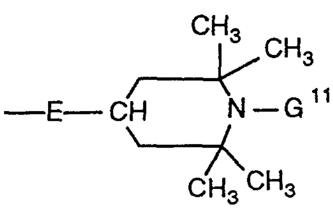

oder

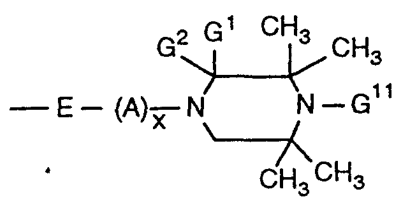

bedeuten,

$G^{11}$ Wasserstoff oder Methyl ist,
$G^1$ und $G^2$ Wasserstoff oder gemeinsam einen Substituenten =O bedeuten,
E -O- oder -$NG^{13}$- ist, A $C_2$-$C_6$-Alkylen und x eine der Zahlen O oder 1 bedeuten,
$G^{13}$ Wasserstoff, $C_1$-$C_{12}$-Alkyl oder Cyclohexyl darstellt,
$G^{20}$, wenn n = 1 ist, gleich $G^{18}$, und wenn n = 2 ist, eine Gruppe -E-B-E- ist, worin B $C_2$-$C_8$-Alkylen oder durch 1 oder 2 Gruppen -N($G^{21}$)- unterbrochenes $C_2$-$C_8$-Alkylen bedeutet,
$G^{21}$ $C_1$-$C_{12}$-Alkyl, Cyclohexyl, Benzyl oder $C_1$-$C_4$-Hydroxyalkyl oder eine Gruppe der Formel

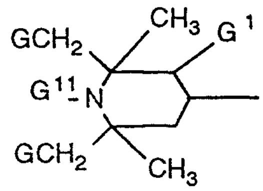

ist, oder $G^{21}$ eine Gruppe der Formel

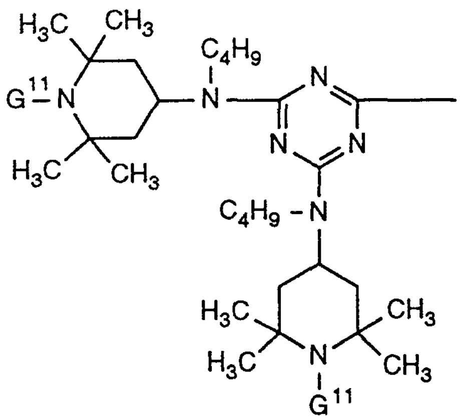

bedeutet;

Amine von besonderem technischem Interesse aus dieser Klasse sind die oben beschriebene Verbindung (76)[ = Amin J] sowie die Verbindungen der Formeln

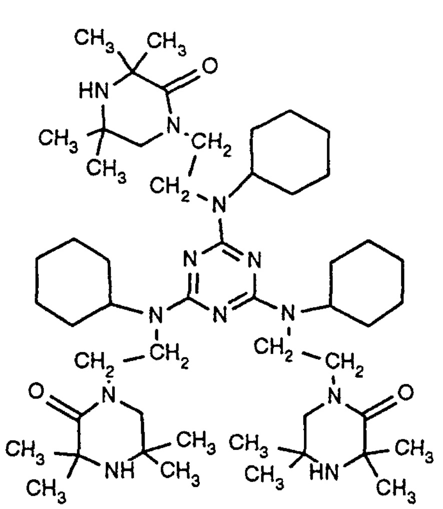

und

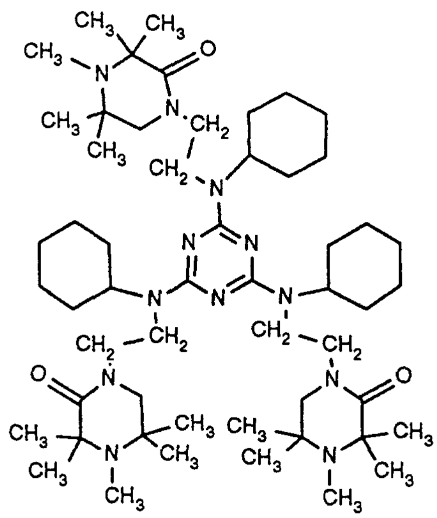

(Amine K und L);

Verbindungen der Formel X, worin n 2 ist, $G^{11}$ Wasserstoff oder Methyl und $G^{14}$ $C_2$-$C_{12}$-Alkylen bedeutet; ein Amin von besonderem technischem Interesse aus dieser Klasse ist die oben beschriebene Verbindung (100) [= Amin M]; sowie

oligomere Verbindungen mit 2 bis 10 wiederkehrenden Einheiten, wie sie durch Reaktion

(i) von

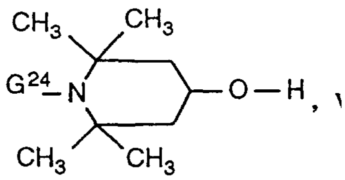

worin $G^{24}$ $C_2$-$C_5$-Hydroxyalkyl bedeutet, mit einer aliphatischen $C_2$-$C_{12}$-Dicarbonsäure oder einem geeigneten reaktiven Derivat wie dem Diester, dem Dichlorid oder dem Anhydrid;

(j) von einem linearen oligomeren Polyester aus einem Dialkohol und Butan-1,2,3,4-tetracarbonsäure mit 2,2,6,6-Tetramethyl-4-hydroxy-piperidin;

(k) von

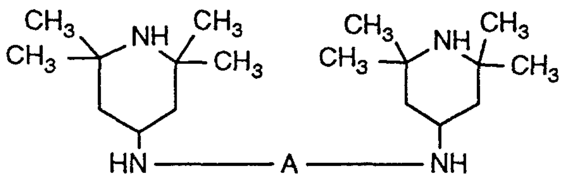 mit 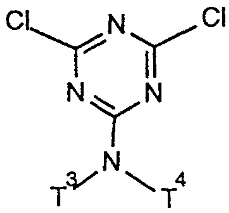 ,

worin A $C_2$-$C_6$-Alkylen, $T^3$ $C_1$-$C_{18}$-Alkyl oder Cyclohexyl, $T^4$ Wasserstoff oder $C_1$-$C_{18}$-Alkyl, oder $T^3$ und $T^4$ zusammen $C_4$-$C_6$-Alkylen oder $C_3$-$C_5$-Oxaalkylen bedeuten;

(l) von $H_2N$-A-NH-A-$NH_2$ mit

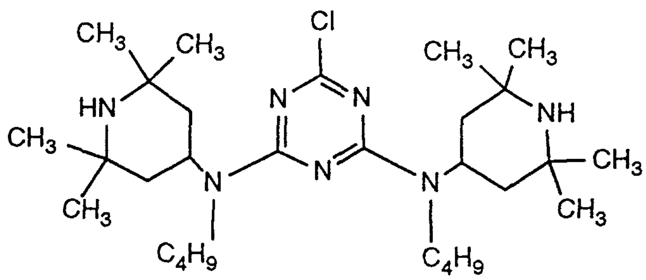

und Br-A-Br, worin A $C_2$-$C_6$-Alkylen bedeutet;

(m) von Verbindungen der Formel

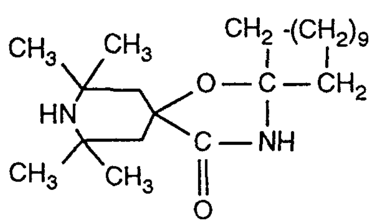

mit Epichlorhydrin;

(n) von

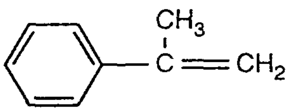 mit 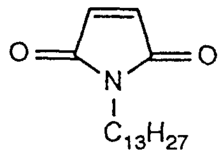 und 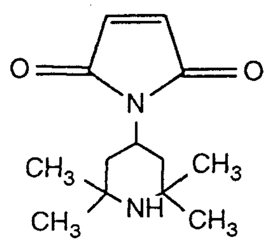

erhältlich sind, sowie solche der Formel
(o)

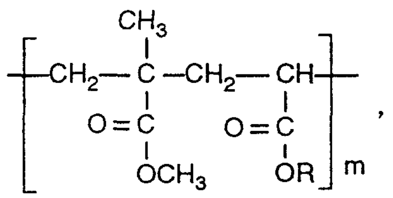

worin ca. ein Drittel der Reste R die Bedeutung $-C_2H_5$ haben und die anderen

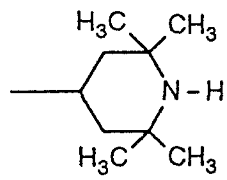

bedeuten und m eine Zahl aus dem Bereich von 2 bis 10 ist;

oligomere Amine von besonderem technischem Interesse sind darunter solche der Formeln (m bezeichnet wiederum eine Zahl aus dem Bereich von 2 bis 10)

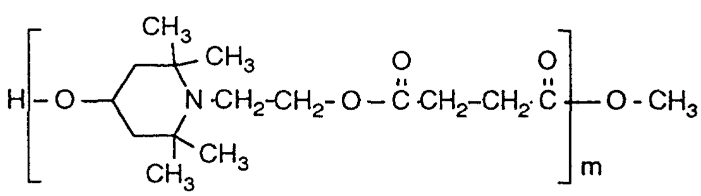 (Amin N);

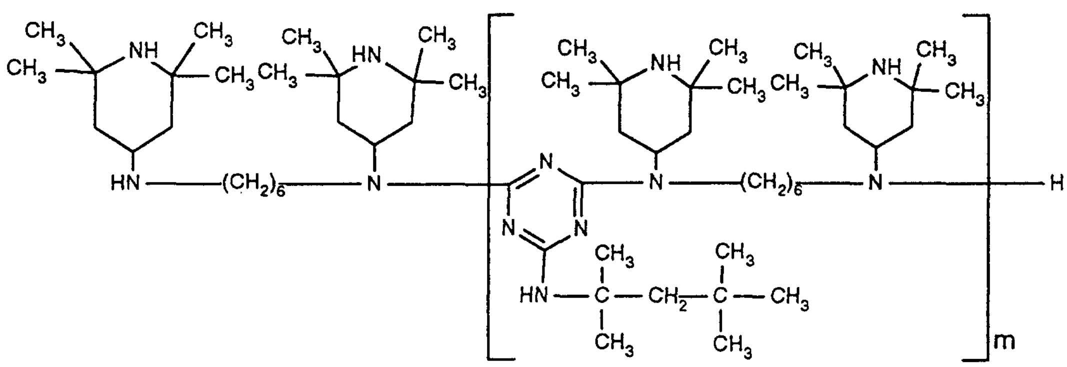

(Amin P);

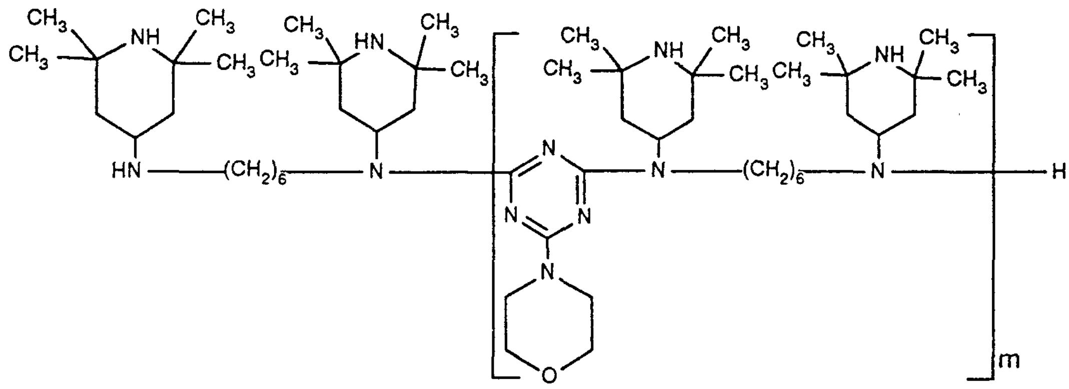

(Amin Q);

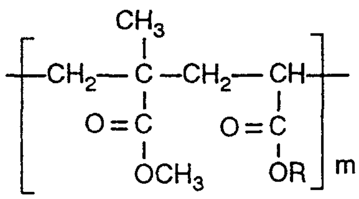

(Amin R), worin ca. ein Drittel der Reste R die Bedeutung $-C_2H_5$ haben und die anderen

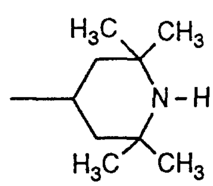

bedeuten; ein linearer Polyester mit 2 bis 10 wiederkehrenden Einheiten aus Butan-1,2,3,4-tetracarbonsäure und einem Dialkohol der Formel

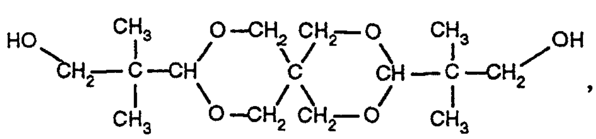

,

worin die Endgruppen und Seitenketten durch Veresterung der freien Carboxylgruppen mit 2,2,6,6-Tetramethyl-4-hydroxy-piperidin gebildet werden (Amin S); ein Copolymerisat, dessen wiederkehrende Einheit aus 2 Einheiten

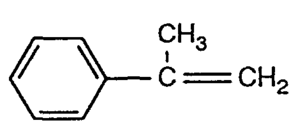

und jeweils 1 Einheit

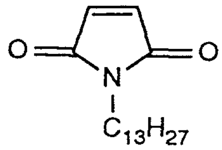

und

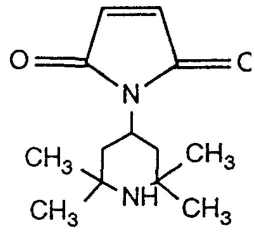

aufgebaut ist (Amin T); das Umsetzungsprodukt von $H_2N$-$(CH_2)_2$-NH-$(CH_2)_2$-$NH_2$ mit

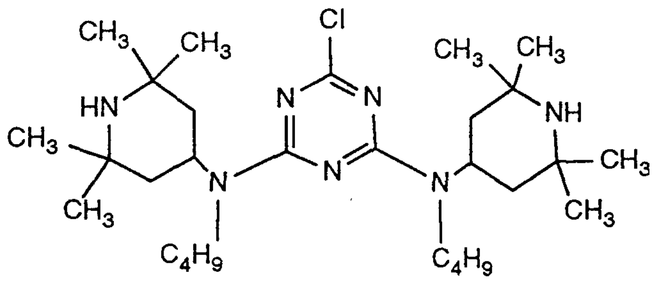

und Br-$(CH_2)_2$-Br (Amin U); sowie das Umsetzungsprodukt der Verbindung der Formel

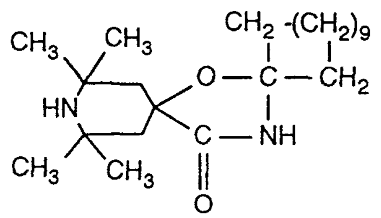

mit Epichlorhydrin (Amin W).

Bei den oligomeren Aminen handelt es sich häufig um Gemische von Verbindungen, die sich bezüglich ihrer Kettenlänge voneinander unterscheiden.

Von hervorgehobener Bedeutung ist die Verwendung der oben spezifizierten Amine A, B, C,D,E,F,G,H,J,K, L,M,N,O,P,Q,R,S,T,U,V und W.

Im erfindungsgemäßen Verfahren ist insbesondere der Zusatz solcher Amine bevorzugt, deren Molekulargewicht bezw. mittleres Molekulargewicht $\overline{M}_n$im Bereich von 300 bis 10000, vor allem im Bereich von 1000 bis 10000 liegt. Darunter besonders hervorzuheben sind nochmals diejenigen Amine, deren Molekulargewicht bezw. mittleres Molekulargewicht $\overline{M}_n$ im Bereich von 1500 bis 10000, beispielsweise im Bereich von 2000 bis 7500 liegt. Bei den Aminen höheren Molekulargewichtes handelt es sich vor allem um sterisch gehinderte Amine.

Die genannten Amine sind bekannte Verbindungen; viele davon sind kommerziell erhältlich.

Im erfindungsgemäßen Verfahren werden vorzugsweise Phosphite oder Phosphonite stabilisiert, welche einer der Formeln (1) bis (7) entsprechen,

(1) 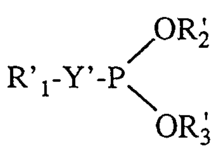 ,

(2) 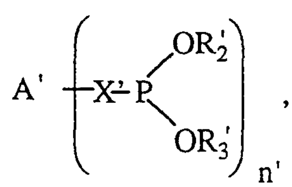 ,

(3) 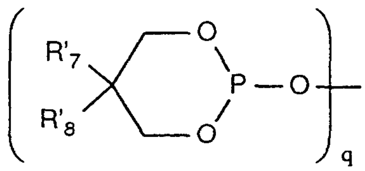 (4) 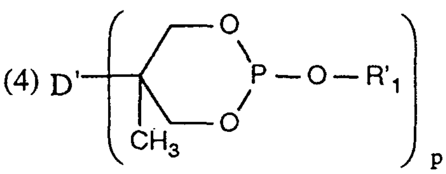 ,

(5) 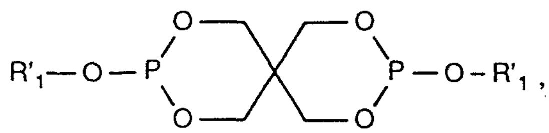

(6) 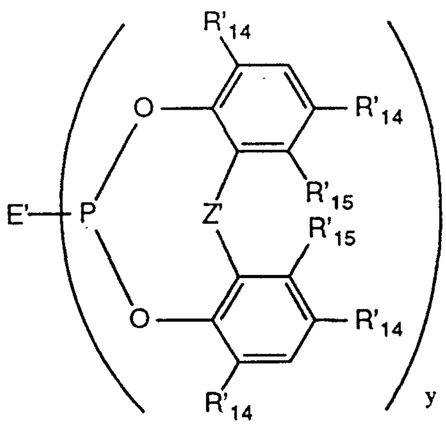, (7) 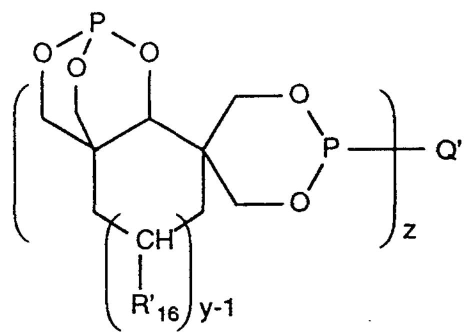

worin die Indices ganzzahlig sind und

n' für 2, 3 oder 4; p für 1 oder 2; q für 2 oder 3; r für 4 bis 12; y für 1, 2 oder 3; und z für 1 bis 6 steht;

A', wenn n' 2 ist, Alkylen mit 2 bis 18 Kohlenstoffatomen; durch -S-, -O- oder $-NR'_4-$ unterbrochenes Alkylen mit 2 bis 12 Kohlenstoffatomen; ein Rest einer der Formeln

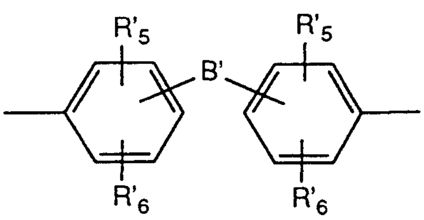 oder 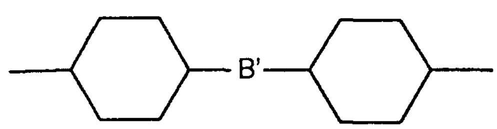

oder Phenylen ist;

A', wenn n' 3 ist, ein Rest der Formel $-C_rH_{2r-1}-$ ist;
A', wenn n' 4 ist, den Rest der Formel

$$C(CH_2)_4-$$

bedeutet;

A" die Bedeutung von A', wenn n' 2 ist, hat;

B' einen Rest der Formel $-CH_2-$; $-CHR'_4-$; $-CR'_1R'_4-$; -S- oder eine direkte Bindung darstellt; oder $C_5$-$C_7$-Cycloalkyliden; oder mit 1 bis 4 $C_1$-$C_4$-Alkylresten in Position 3, 4 und/oder 5 substituiertes Cyclohexyliden bedeutet;

D', wenn p 1 ist, Methyl und, wenn p 2 ist, $-CH_2OCH_2-$ bedeutet;

E', wenn y 1 ist, Alkyl mit 1 bis 18 Kohlenstoffatomen, Phenyl, ein Rest der Formel $-OR'_1$ oder Halogen ist;

E', wenn y 2 ist, ein Rest der Formel -O-A"-O- ist;

E', wenn y 3 ist, ein Rest der Formel

$$R'_4C(CH_2O)_3-$$

ist;

Q' für den Rest eines mindestens z-wertigen Alkohols oder Phenols steht, wobei dieser über das (die) alkoholische (n) bzw. phenolische(n) O-Atom(e) an das (die) P-Atom(e) gebunden ist;

$R'_1$, $R'_2$ und $R'_3$ unabhängig voneinander Alkyl mit 1 bis 30 Kohlenstoffatomen; mit Halogen, $-COOR_4'$, -CN oder $-CONR_4'R_4'$ substituiertes Alkyl mit 1 bis 18 Kohlenstoffatomen; durch -S-, -O- oder $-NR'_4-$ unterbrochenes Alkyl mit 2 bis 18 Kohlenstoffatomen; Phenyl-$C_1$-$C_4$-alkyl; Cycloalkyl mit 5 bis 12 Kohlenstoffatomen; Phenyl oder Naphthyl; mit Halogen, 1 bis 3 Alkylresten oder Alkoxyresten mit insgesamt 1 bis 18 Kohlenstoffatomen oder mit Phenyl-$C_1$-$C_4$-alkyl substituiertes Phenyl oder Naphthyl; oder ein Rest der Formel

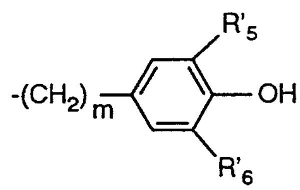

sind, worin m eine ganze Zahl aus dem Bereich 3 bis 6 bedeutet;

$R'_4$ beziehungsweise die Reste $R_4'$ unabhängig voneinander Wasserstoff; Alkyl mit 1 bis 18 Kohlenstoffatomen; Cycloalkyl mit 5 bis 12 Kohlenstoffatomen; oder Phenylalkyl mit 1 bis 4 Kohlenstoffatomen im Alkylteil;

$R'_5$ und $R'_6$ unabhängig voneinander Wasserstoff; Alkyl mit 1 bis 8 Kohlenstoffatomen oder Cycloalkyl mit 5 oder 6 Kohlenstoffatomen sind;

$R'_7$ und $R'_8$, im Fall q = 2, unabhängig voneinander $C_1$-$C_4$-Alkyl oder zusammen einen 2,3-Dehydro-pentamethylenrest darstellen; und

$R'_7$ und $R'_8$, im Fall q = 3, Methyl bedeuten;

die Substituenten $R'_{14}$ unabhängig voneinander Wasserstoff; Alkyl mit 1 bis 9 Kohlenstoffatomen oder Cyclohexyl sind;

die Substituenten $R'_{15}$ unabhängig voneinander Wasserstoff oder Methyl; und

$R'_{16}$ Wasserstoff oder $C_1$-$C_4$-Alkyl darstellt und im Fall, daß mehrere Reste $R'_{16}$ vorhanden sind, die Reste $R'_{16}$ gleich oder verschieden sind;

X' und Y' jeweils eine direkte Bindung oder -O- darstellen; und

Z' eine direkte Bindung; $-CH_2-$; $-C(R'_{16})_2-$ oder -S- ist.

Besonders bevorzugt ist ein Verfahren, worin das Phosphit oder Phosphonit eines der Formeln (1), (2), (5) oder (6) ist, worin

n' für die Zahl 2 und y für die Zahl 1 oder 2 steht;

A' Alkylen mit 2 bis 18 Kohlenstoffatomen; p-Phenylen oder p-Biphenylen ist;

E' im Fall y = 1 $C_1$-$C_{18}$-Alkyl, $-OR_1$ oder Fluor; und im Fall y = 2 p-Biphenylen ist;

$R'_1$, $R'_2$ und $R'_3$ unabhängig voneinander Alkyl mit 1 bis 18 Kohlenstoffatomen;

Phenyl-$C_1$-$C_4$-alkyl; Cyclohexyl; Phenyl; mit 1 bis 3 Alkylresten mit insgesamt 1 bis 18 Kohlenstoffatomen substituiertes Phenyl bedeutet;

die Substituenten $R'_{14}$ unabhängig voneinander Wasserstoff oder Alkyl mit 1 bis 9 Kohlenstoffatomen sind;

$R'_{15}$ Wasserstoff oder Methyl ist;

X' eine direkte Bindung;

Y' -O-; und

Z' eine direkte Bindung oder $-CH(R'_{16})-$ ist.

Ein Verfahren zum Stabilisieren eines Phosphits oder Phosphonits einer der Formeln (1), (2), (5) oder (6), worin

n' für die Zahl 2 und y für die Zahl 1 steht;
A' p-Biphenylen ist;
E' $C_1$-$C_{18}$-Alkoxy ist;
$R'_1$, $R'_2$ und $R'_3$ unabhängig voneinander mit 2 oder 3 Alkylresten mit insgesamt 2 bis 12 Kohlenstoffatomen substituiertes Phenyl bedeutet;
die Substituenten $R'_{14}$ unabhängig voneinander Methyl oder tert.-Butyl sind;
$R'_{15}$ Wasserstoff ist;
X' eine direkte Bindung;
Y'-O-; und
Z' eine direkte Bindung, $-CH_2-$ oder $-CH(CH_3)-$ ist,

ist von besonderem technischem Interesse.

Besonders bevorzugt sind Phosphite, insbesondere solche der Formeln (1) und (5).

Die folgenden Verbindungen sind Beispiele für Phosphite und Phosphonite, deren Stabilität gegenüber Hydrolyse sich durch das erfindungsgemäße Verfahren besonders vorteilhaft verbessern läßt:

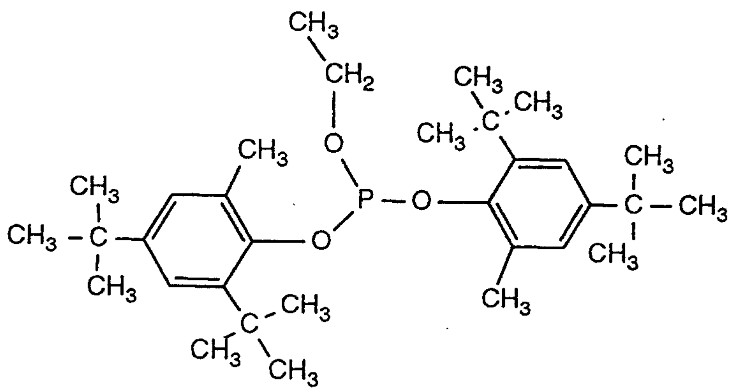

(Ph-1);

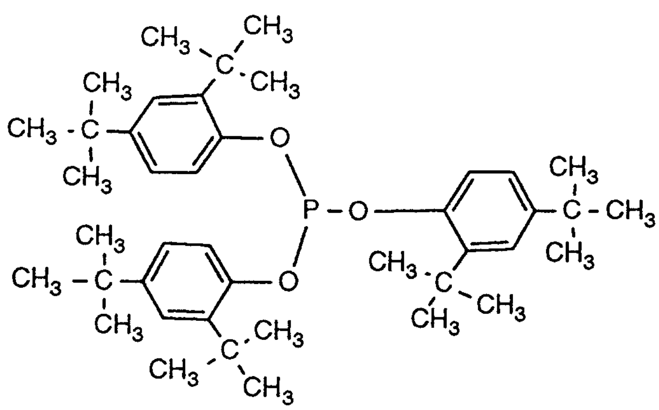

(Ph-2);

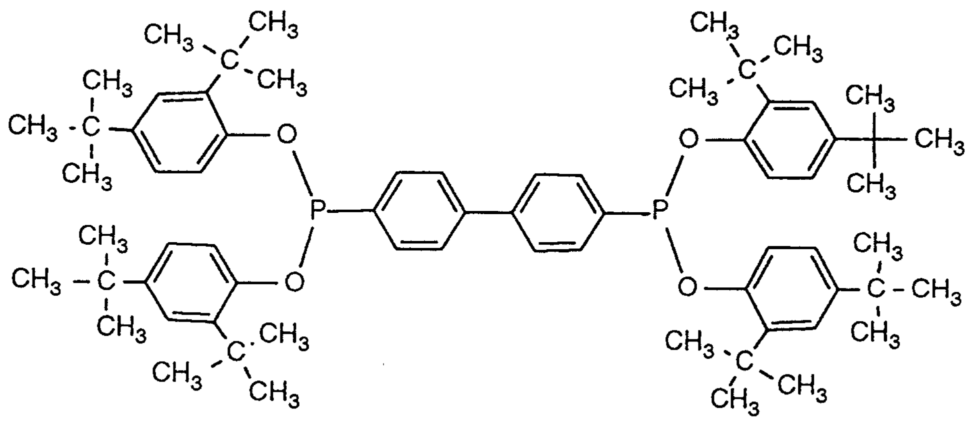

(Ph-3);

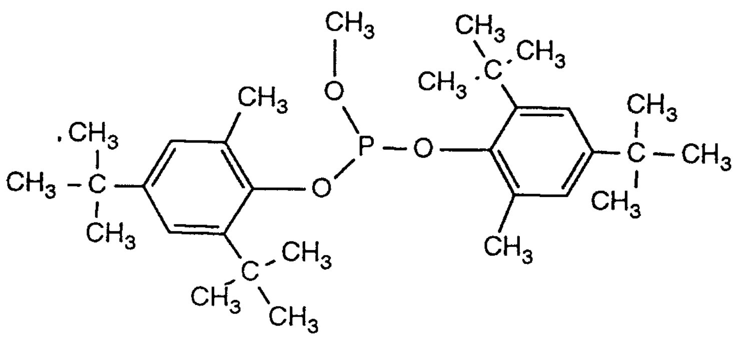

(Ph-4);

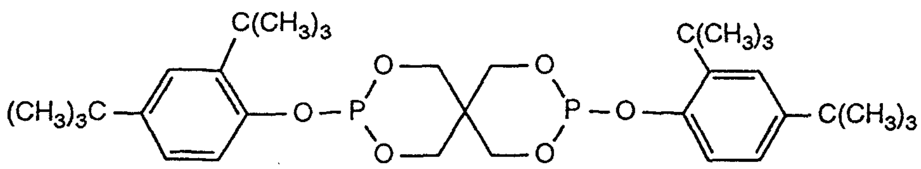

(Ph-5);

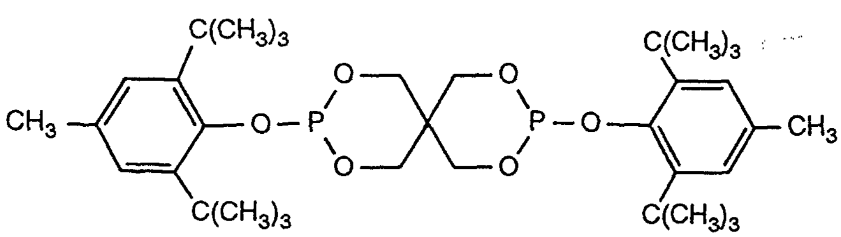

(Ph-6);

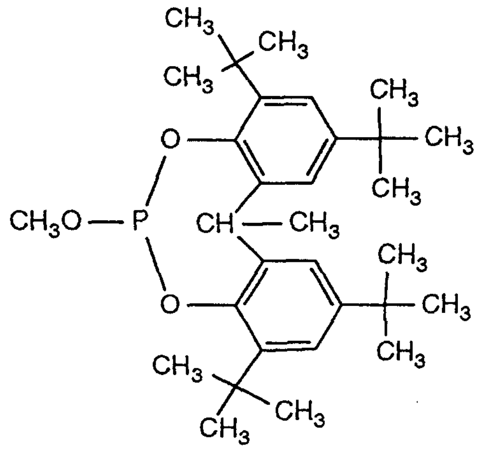

(Ph-7);

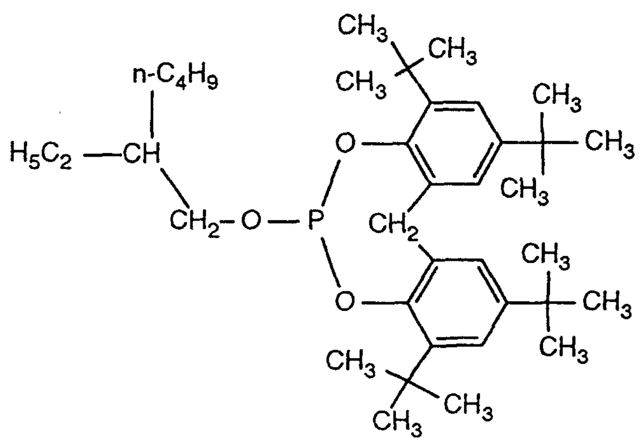

(Ph-8).

Die genannten Phosphite und Phosphonite sind bekannte Verbindungen; sie sind zum Teil kommerziell erhältlich.

Einige kommerzielle Phosphite und Phosphonite liegen als Verbindungsgemische oder in vorstabilisierter Form vor. Als Vorstabilisierung ist diesen Verbindungen meist ein Amin, beispielsweise ein Niederalkylamin oder Triisopropanolamin, in einer Konzentration von ca. 1 % auf konventionelle Weise beigemischt. Auch die Hydrolysestabilität derartiger Produkte läßt sich mit Hilfe des erfindungsgemäßen Verfahrens deutlich verbessern.

Die Produkte aus dem erfindungsgemäßen Verfahren lassen sich vorteilhaft als Stabilisatoren für organisches Material, besonders organische Polymere, beispielsweise synthetische Polymere, gegen den schädigenden Einfluß von Wärme, Sauerstoff und/oder Licht verwenden. Beispiele für solche Polymere sind etwa der US-A-4 855 345, Spalte 4, Zeile 63, bis Spalte 7, Zeile 54, zu entnehmen.

Die erfmdungsgemäß stabilisierten Phosphite und Phosphonite zeichnen sich durch ihre hervorragende Beständigkeit gegen Hydrolyse aus und weisen eine gute Lagerstabilität auch bei hoher Luftfeuchtigkeit auf.

Die nachfolgenden Beispiele illustrieren das erfindungsgemäße Verfahren weiter. Alle Angaben in Teilen oder Prozenten beziehen sich, ebenso wie in der übrigen Beschreibung und in den Ansprüchen, auf das Gewicht, sofern nichts anderes angegeben ist. Soweit Prozentangaben auf Phosphit oder Phosphonit bezogen sind, ist damit Phosphit oder Phosphonit in der Schmelze gemeint, wenn nicht ausdrücklich eine andere Bezugsmenge genannt ist. Die Strukturformeln der in den Beispielen verwendeten Phosphite, Phosphonite und Amine sind, wo nicht direkt angegeben, weiter oben im Text aufgeführt. In den Tabellen wird bei Zahlenangaben durchweg die Schreibweise mit Dezimalpunkt anstatt mit Dezimalkomma verwendet

Beispiel 1: 300 g des Phosphits Ph-1 werden zusammen mit 225 g Isopropanol, 2,25 g Toluol und 30 g Amin A (= Triisopropanolamin) unter Rühren auf 70-75°C gebracht. Die resultierende homogene Schmelze wird innerhalb ca. 1 Stunde unter Rühren zu einer Suspension von 20 g Ph-1 in 450 g Isopropanol und 20 g Amin A gegeben, deren Temperatur während dieses Vorganges durch Kühlen auf 20-30°C gehalten wird. Die Mischung wird anschließend auf 10-15°C gekühlt und in diesem Temperaturbereich für weitere 3 Stunden gerührt. Daraufhin wird das kristalline Produkt

abfiltriert und bei 60°C unter reduziertem Druck getrocknet.

Die Elementaranalyse ergibt für das trockene Produkt einen Gehalt von 1,2 Gew.-% Amin A (bezogen auf Phosphit).

Eine als Vergleich dienende Probe wird ohne Zugabe eines Amins kristallisiert

Gleiche Anteile des Produktes werden anschließend folgenden Tests auf Hydrolysebeständigkeit unterworfen:

a) Bei der Lagerung wird die Zeit gemessen, zu der visuell ein beginnendes Zerfließen des anfänglichen Pulvers (Übergang p-k) festzustellen ist, sowie die Zeitdauer, bis zu der das Material flüssig ist (Übergang k-f). Zum letztgenannten Zeitpunkt wird die Gewichtszunahme während der Dauer der Lagerung festgestellt; die Gewichtszunahme gibt einen Hinweis auf die Wasseraufnahme des Materials. Die Testbedingungen (Temperatur und Luftfeuchtigkeit während der Lagerung) sind bei den jeweiligen Beispielen angegeben.

b) Nach 8 Stunden Lagerung bei 70°C und 100 % Luftfeuchtigkeit wird mit Hilfe der Flüssigchromatographie der Gehalt an Phosphit Ph-1 ermittelt.

Die Ergebnisse sind der nachfolgenden Tabelle 1 zu entnehmen.

Beispiele 2-13: Die Verbindung Ph-1 wird mit den Aminen A, C, E, H, J, K, P, Q und U entsprechend der in Beispiel 1 beschriebenen Methode stabilisiert; im Unterschied zu Beispiel 1 werden jedoch im Kristallisationsmedium kein Phosphit und kein Amin vorgelegt. Das erhaltene Produkt wird auf Hydrolysebeständigkeit getestet, wie in Beispiel 1 beschrieben. Die Testbedingungen in Test a: Lagerung bei 50°C und 75 % Luftfeuchtigkeit.

Weitere Bedingungen und Testergebnisse sind in Tabelle 1 zusammengestellt.

In Tabelle 1 und den nachfolgenden Tabellen bedeuten die Spaltenüberschriften:

| | |
|---|---|
| % eing. | Menge Amin in der Schmelze, %-Angabe bezogen auf Phosphit bezw. Phosphonit in der Schmelze; |
| % Geh. | Amingehalt im Phosphit bezw. Phosphonit nach Kristallisation; |
| Solv1, % | Hauptlösungsmittel für Schmelze, %-Angabe bezogen auf Phosphit bezw. Phosphonit in der Schmelze; |
| Solv2, % | weiteres Lösungsmittel für Schmelze, %-Angabe bezogen auf Phosphit bezw. Phosphonit in der Schmelze; |
| T/°C | Temperaturbereich von Schmelze bezw. Kristallisationsmedium; |
| Solvens, % | Lösungsmittel für Kristallisationsmedium, %-Angabe bezogen auf Phosphit bezw. Phosphonit in der Schmelze; |
| IPA | Isopropanol; |
| TOL | Toluol; |
| MeOH | Methanol; |
| % Impfkr. | vorgelegte Menge an Phosphit als Impfkristalle, %-Angabe bezogen auf Phosphit bezw. Phosphonit in der Schmelze; |
| % Amin | vorgelegte Menge an Amin im Kristallisationsmedium, %-Angabe bezogen auf Phosphit bezw. Phosphonit in der Schmelze; |
| %Zers.(8h) | Prozentuale Zersetzung der Probe nach 8 h (100 % = Phosphitgehalt zu Testbeginn) [Test b)]; |
| p-k /h | Zeit in Stunden bis zum beginnenden Zerfließen [Test a)]; |
| k-f /h(%W) | Zeit in Stunden bis Probe flüssig ist (klare Lösung). Angabe in Klammern: Gewichtszunahme der Probe gegenüber Testbeginn (Gew.-% bezogen auf Beginn der Lagerung = Wassergehalt) [Test a)]. |

Tab. 1: Stabilisierung von Bis-(2,4,-di-t.butyl-6-methylphenyl)-ethyl-phosphit (Ph-1)

| | SCHMELZE | | | | | | KRIST.MEDIUM | | | | TESTRESULTATE | | |
|---|---|---|---|---|---|---|---|---|---|---|---|---|---|
| Bsp.Nr. | Amin | % eing. | % Geh. | Solv1, % | Solv2, % | T / °C | Solvens, % | %Impfkr. | %Amin | T / °C | % Zers.(8 h) | p-k/h | k-f/h (%W) |
| Vergleich | ohne | 0 | 0 | IPA, 75 | TOL, 0.75 | 70-75 | IPA, 150 | 0 | 0 | 20-30 | 85 (n. 2 h) | 005 | 37 (2.5) |
| 1 | A | 10 | 1.2 | IPA, 75 | TOL, 0.75 | 70-75 | IPA, 150 | 6.7 | 6.7 | 20-30 | 5 | 056 | 126 (2.2) |
| 2 | A | 20 | 2.7 | IPA, 75 | TOL, 0.75 | 70-75 | IPA, 150 | 0 | 0 | 20-30 | 3.2 | 110 | 171 (2.0) |
| 3 | Q | 20 | 3.5 | IPA, 75 | TOL, 0.75 | 70-75 | IPA, 150 | 0 | 0 | 20-30 | 5 | 025 | >120 |
| 4 | P | 5 | 1.0 | IPA, 75 | TOL, 0.75 | 70-75 | IPA, 150 | 0 | 0 | 20-30 | 13.4 | 056 | 144 (1.5) |
| 5 | P | 10 | 2.7 | IPA, 75 | TOL, 0.75 | 70-75 | IPA, 150 | 0 | 0 | 20-30 | 3.1 | 160 | 220 |
| 6 | P | 20 | 3.8 | IPA, 75 | TOL, 0.75 | 70-75 | IPA, 150 | 0 | 0 | 20-30 | 1.0 | 200 | 312 (1.1) |
| 7 | C | 20 | 2.9 | IPA, 75 | TOL, 0.75 | 70-75 | IPA, 150 | 0 | 0 | 20-30 | 15.2 | 040 | 72 (2.7) |
| 8 | J | 10 | 1.5 | IPA, 75 | TOL, 0.75 | 70-75 | IPA, 150 | 0 | 0 | 20-30 | 9.5 | 040 | 72 (1.0) |
| 9 | J | 20 | 3.1 | IPA, 75 | TOL, 0.75 | 70-75 | IPA, 150 | 0 | 0 | 20-30 | 2.0 | 135 | 171 (1.3) |
| 10 | H | 10 | 6.5 | IPA, 75 | TOL, 0.75 | 70-75 | IPA, 150 | 0 | 0 | 20-30 | 12.4 | 056 | 120 (1.5) |
| 11 | K | 10 | 1.4 | IPA, 75 | TOL, 0.75 | 70-75 | IPA, 150 | 0 | 0 | 20-30 | 19.4 | 032 | 48 (1.0) |
| 12 | U | 10 | 0.9 | IPA, 75 | TOL, 0.75 | 70-75 | IPA, 150 | 0 | 0 | 20-30 | 4.5 | 056 | 120 (1.6) |
| 13 | E | 10 | 0.9 | IPA, 75 | TOL, 0.75 | 70-75 | IPA, 150 | 0 | 0 | 20-30 | 8.6 | 032 | 48 (0.8) |

Beispiele 14-17: Eine kommerzielle Phosphonitmischung mit Ph-3 als der Hauptkomponente wird nach der

in den Beispielen 2-13 beschriebenen Methode stabilisiert; Zusammensetzung der Charge:

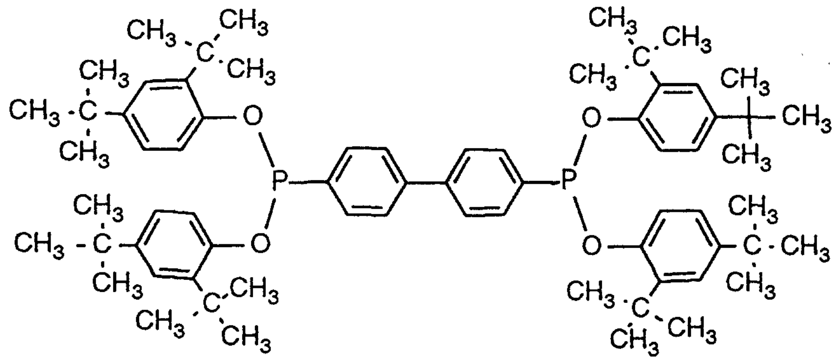

(Ph-3): 43 %

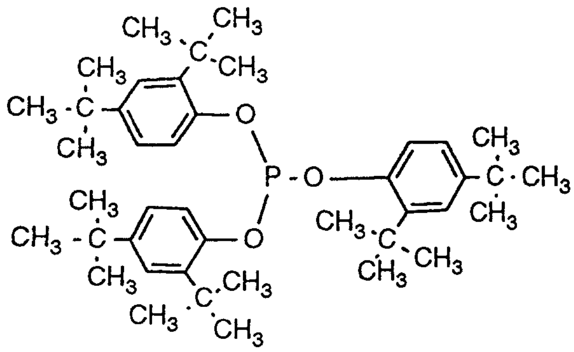

(Ph-2): 17 %

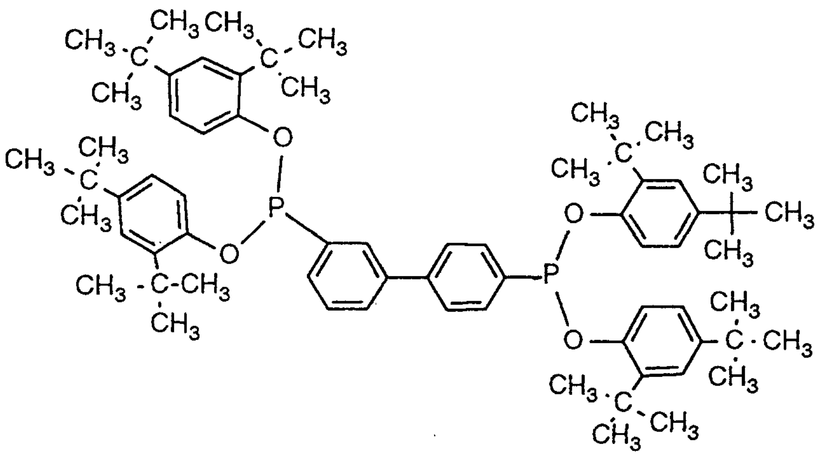

(Ph-3b): 17 %

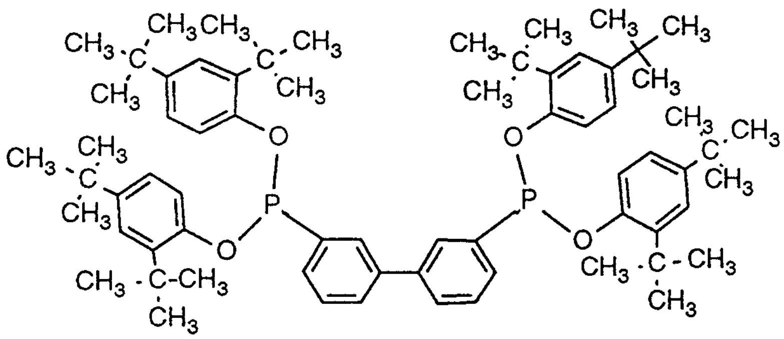

(Ph-3c): 01 %

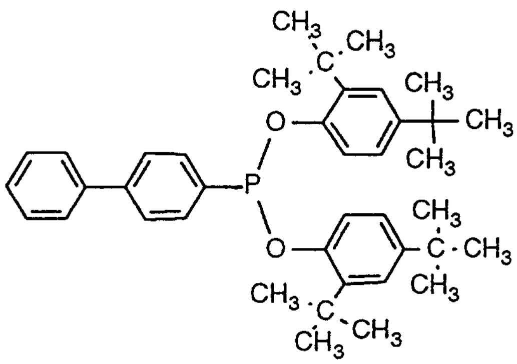

(Ph-3d): 13 %

weitere Verbindungen: 09 %.

Die stabilisierte Mischung wird mit Hilfe von Test a) auf Hydrolysebeständigkeit geprüft; Testbedingungen: Lagerung bei 50°C und 75 % Luftfeuchtigkeit. Verfahrensbedingungen und Testergebnisse sind in Tabelle 2 zusammengestellt.

Beispiele 18-23: Die Verbindungen Ph-5 und Ph-6 werden nach der in den Beispielen 2-13 beschriebenen Methode stabilisiert und mit Hilfe von Test a) auf Hydrolysebeständigkeit geprüft. Testbedingungen: Lagerung bei 50°C und 75 % Luftfeuchtigkeit. Verfahrensbedingungen und Testergebnisse sind in den Tabellen 3 und 4 zusammengestellt.

Beispiele 24-29: Die Verbindung Ph-2 wird nach der in den Beispielen 2-13 beschriebenen Methode stabilisiert und mit Hilfe von Test a) auf Hydrolysebeständigkeit geprüft; Testbedingungen: Lagerung bei 70°C und 100 % Luftfeuchtigkeit. Verfahrensbedingungen und Testergebnisse sind in Tabelle 5 zusammengestellt.

Beispiele 30-33: Eine kommerzielle Phosphonitmischung mit Ph-3 als der Hauptkomponente wird nach der in den Beispielen 2-13 beschriebenen Methode stabilisiert; Zusammensetzung der Charge (Formeln s. Beispiele 14-17):

| | |
|---|---|
| Ph-3 | 35 % |
| Ph-2 | 09 % |
| Ph-3b | 20 % |
| Ph-3c | 04 % |
| Ph-3d | 15 % |
| weitere | 17 %. |

Die stabilisierte Mischung wird mit Hilfe von Test a) auf Hydrolysebeständigkeit geprüft; Testbedingungen: Lagerung bei 50°C und 75 % Luftfeuchtigkeit.
Verfahrensbedingungen und Testergebnisse sind in Tabelle 6 zusammengestellt.

Tab. 2: Stabilisierung einer Phosphonitmischung mit der Hauptkomponente der Formel

(Ph-3)

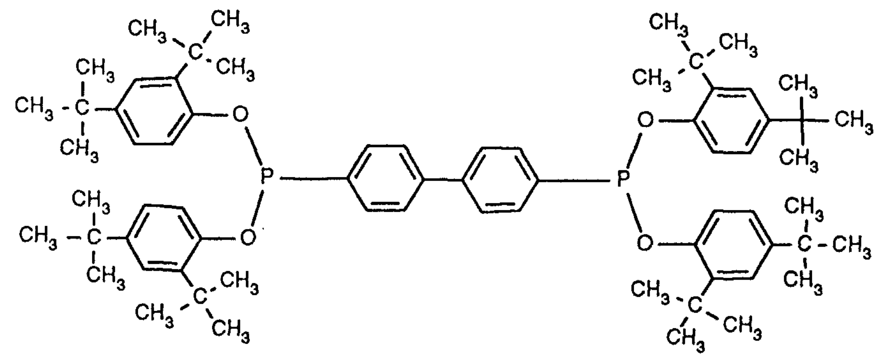

| Bsp. Nr. | SCHMELZE Amin | %eing. | %Geh. | Solv.1,% | Solv.2,% | T / °C | KRIST. MEDIUM Solvens, % | %Impfkr. | %Amin | T / °C | TESTRESULTATE p-k / h | k-f / h (% W) |
|---|---|---|---|---|---|---|---|---|---|---|---|---|
| Vergleich | ohne | 0 | 0 | IPA, 300 | - | 60-65 | MeOH, 400 | 0 | 0 | 15-20 | 110 | 150 (15) |
| 14 | J | 20 | 3.4 | IPA, 300 | - | 60-65 | MeOH, 400 | 0 | 0 | 15-20 | >360 | |
| 15 | N | 5 | 5 | IPA, 300 | - | 60-65 | MeOH, 400 | 0 | 0 | 15-20 | 260 | |
| 16 | N | 10 | 10 | IPA, 300 | - | 60-65 | MeOH, 400 | 0 | 0 | 15-20 | >360 | |
| 17 | C | 20 | 2.8 | IPA, 300 | - | 60-65 | MeOH, 400 | 0 | 0 | 15-20 | >360 | |

Tab. 3: Stabilisierung der Verbindung der Formel

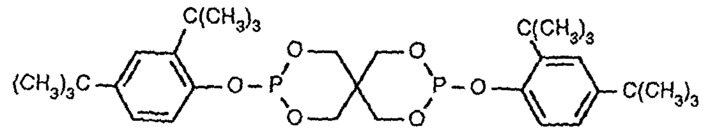

(Ph-5)

| Bsp.Nr. | SCHMELZE Amin | %eing. | %Geh. | Solv1,% | Solv2,% | T / °C | KRIST.MEDIUM Solvens, % | %Impfkr. | %Amin | T / °C | TESTRESULTATE p-k / h | k-f / h (% W) |
|---|---|---|---|---|---|---|---|---|---|---|---|---|
| Vergl. | ohne | 0 | 0 | TOL, 250 | - | 75-80 | MeOH, 500 | 0 | 0 | 20-25 | 5 | 17 (30) |
| 18 | A | 20 | 0.5 | TOL, 250 | - | 75-80 | MeOH, 500 | 0 | 0 | 20-25 | 8 | 24 (33) |
| 19 | P | 20 | 2.0 | TOL, 250 | - | 75-80 | MeOH, 500 | 0 | 0 | 20-25 | 8 | 24 (24) |
| 20 | N | 10 | 4.8 | TOL, 250 | - | 75-80 | MeOH, 500 | 0 | 0 | 20-25 | 15 | 48 (37) |
| 21 | N | 20 | 10.5 | TOL, 250 | - | 75-80 | MeOH, 500 | 0 | 0 | 20-25 | 15 | 48 (28) |

Tab. 4: Stabilisierung der Verbindung der Formel

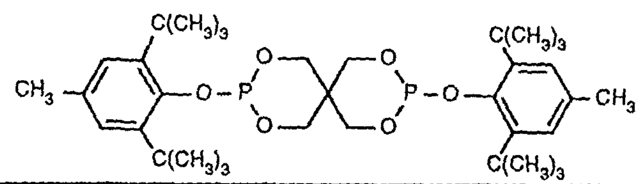

(Ph-6)

| Bsp.Nr. | SCHMELZE Amin | %eing. | %Geh. | Solv1,% | Solv2,% | T / °C | KRIST.MEDIUM Solvens,% | %Impfkr. | %Amin | T / °C | TESTRESULTATE p-k / h | k-f / h (% W) |
|---|---|---|---|---|---|---|---|---|---|---|---|---|
| Vergl. | ohne | 0 | 0 | TOL,500 | IPA, 50 | 75-80 | IPA, 500 | 0 | 0 | 15-20 | 96 | 168 (30) |
| 22 | A | 20 | 1.1 | TOL,500 | IPA, 50 | 75-80 | IPA, 500 | 0 | 0 | 15-20 | >400 | |
| 23 | N | 20 | 2.0 | TOL,500 | IPA, 50 | 75-80 | IPA, 500 | 0 | 0 | 15-20 | 210 | 240 |

Tab. 5: Stabilisierung von Tris-(2,4,-di-t.butylphenyl)-phosphit (Ph-2)

| | SCHMELZE | | | | | | KRIST.MEDIUM | | | | TESTRESULTATE | |
|---|---|---|---|---|---|---|---|---|---|---|---|---|
| Bsp.Nr. | Amin | % eing. | % Geh. | Solv1, % | Solv2, % | T / °C | Solvens, % | %Impfkr. | %Amin | T / °C | p-k / h | k-f / h (% W) |
| Vergleich | ohne | 0 | 0 | TOL, 200 | - | 75 | IPA, 600 | 0 | 0 | 20-30 | 026 | 47 (27) |
| 24 | N | 2 | 0.7 | TOL, 200 | - | 75 | IPA, 600 | 0 | 0 | 20-30 | 216 | 240 (11) |
| 25 | N | 5 | 1.8 | TOL, 200 | - | 75 | IPA, 600 | 0 | 0 | 20-30 | 216 | 240 (11) |
| 26 | N | 10 | 5.1 | TOL, 200 | - | 75 | IPA, 600 | 0 | 0 | 20-30 | 240 | 312 (16) |
| 27 | N | 25 | 16.1 | TOL, 200 | - | 75 | IPA, 600 | 0 | 0 | 20-30 | >312 | >312 (0) |
| 28 | P | 2 | 0.1 | TOL, 200 | - | 75 | IPA, 600 | 0 | 0 | 20-30 | 192 | 216 |
| 29 | P | 5 | 3.8 | TOL, 200 | - | 75 | IPA, 600 | 0 | 0 | 20-30 | 216 | 240 |

Tab. 6: Stabilisierung einer Phosphonitmischung mit der Hauptkomponente der Formel

(Ph-3)

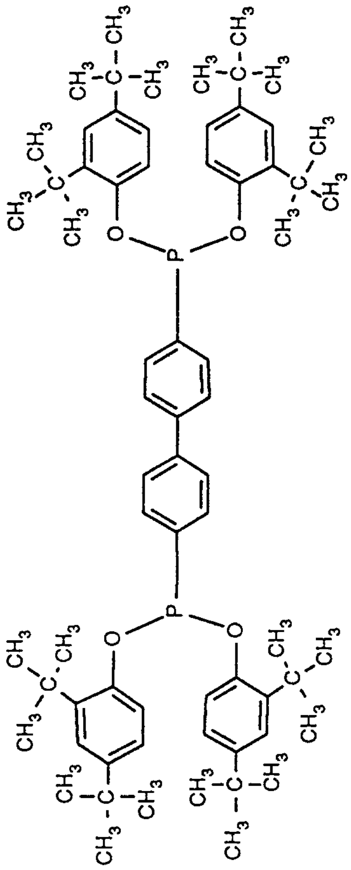

| Bsp. Nr. | SCHMELZE Amin | % eing. | % Geh. | Solvens, % | T / °C | KRIST. MEDIUM Solvens, % | %Impfkr. | %Amin | T / °C | TESTRESULTATE p-k / h | k-f / h (% W) |
|---|---|---|---|---|---|---|---|---|---|---|---|
| Vergleich | ohne | 0 | 0 | IPA, 400 | 75 | MeOH, 400 | 0 | 0 | 20-30 | 24 | 48 (3.4) |
| 30 | N | 5 | 7.5 | IPA, 400 | 75 | MeOH, 400 | 0 | 0 | 20-30 | 348 | 360 (0.2) |
| 31 | N | 10 | 18.2 | IPA, 400 | 75 | MeOH, 400 | 0 | 0 | 20-30 | 504 | 816 (2.2) |
| 32 | N | 25 | 32.3 | IPA, 400 | 75 | MeOH, 400 | 0 | 0 | 20-30 | 648 | 840 (0.9) |
| 33 | P | 2 | 2.1 | IPA, 400 | 75 | MeOH, 400 | 0 | 0 | 20-30 | 240 | 312 (2.6) |

Beispiele 34-35: Die Verbindung Ph-5 wird nach der in den Beispielen 2-13 beschriebenen Methode stabilisiert; als Kristallisationsmedium wird Isopropanol ohne weitere Zusätze eingesetzt Die unstabilisierte und die stabilisierte Verbindung werden mit Hilfe von Test a) auf Hydrolysebeständigkeit geprüft. Testbedingungen: Lagerung bei 50°C und 75 % Luftfeuchtigkeit.
Weitere Verfahrensbedingungen und Testergebnis (k-f/h = Zeit bis zur Verflüssigung der Probe in Stunden) sind in Tabelle 7 zusammengestellt.

Tab. 7: Stabilisierung der Verbindung der Formel

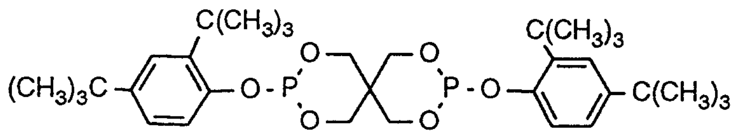
(Ph-5)

| Bsp.Nr. | SCHMELZE Amin | %eing. | %Geh. | Solv.,% | T/°C | KRIST.MEDIUM Solv.,% | T/°C | RESULTAT k-f/h |
|---|---|---|---|---|---|---|---|---|
| Vergl. | ohne | 0 | 0 | TOL,250 | 75 | IPA,600 | 20-30 | 8 |
| 34 | N | 5 | 1.3 | TOL,250 | 75 | IPA,600 | 20-30 | 24 |
| 35 | P | 5 | 0.15 | TOL,200 | 75 | IPA,600 | 20-30 | 24 |

Die Beispiele zeigen, daß die erfindungsgemäß hergestellten und stabilisierten Phosphite eine deutlich bessere Beständigkeit gegen Hydrolyse an feuchter Luft aufweisen als unstabilisierte Phosphite.

**Patentansprüche**

1. Verfahren zur Stabilisierung eines kristallinen organischen Phosphits oder Phosphonits gegen Hydrolyse, dadurch gekennzeichnet, daß ein auf 50-100°C temperiertes Gemisch, welches Phosphit bezw. Phosphonit, ein Lösungsmittel oder Lösungsmittelgemisch und 0,1 bis 100 Gew.-% (bezogen auf Phosphit bezw. Phosphonit) eines Amins enthält, als homogene Schmelze in ein flüssiges Kristallisationsmedium gegeben wird, dessen Temperatur während der Zugabe um 10-70°C unter der Temperatur der Schmelze gehalten wird.

2. Verfahren gemäß Anspruch 1, worin die Schmelze als Hauptlösungsmittel einen Alkohol oder einen Kohlenwasserstoff in einer Menge von 20 bis 500 Gew.-% bezogen auf Phosphit bezw. Phosphonit, und ein weiteres Lösungsmittel in einer Menge von 0-50 Gew.-% bezogen auf das Hauptlösungsmittel enthält.

3. Verfahren gemäß Anspruch 1, worin die Temperatur der Schmelze 55-90°C beträgt.

4. Verfahren gemäß Anspruch 1, worin der Temperaturunterschied zwischen Schmelze und Kristallisationsmedium 30-70°C beträgt.

5. Verfahren gemäß Anspruch 1, worin das Kristallisationsmedium auf einer Temperatur gehalten wird, die mindestens 10°C unterhalb der resultierenden Liquidustemperätur liegt.

6. Verfahren gemäß Anspruch 1, worin als Kristallisationsmedium 80-800 Gew.-% (bezogen auf Phosphit bezw. Phosphonit) eines Lösungsmittels eingesetzt werden.

7. Verfahren gemäß Anspruch 6, worin als Kristallisationsmedium ein $C_1$-$C_5$-Alkanol oder ein Gemisch verschiedener $C_1$-$C_5$-Alkanole eingesetzt wird.

8. Verfahren gemäß Anspruch 6, worin das Kristallisationsmedium aus einer Suspension von 2 bis 20 Gew.-% kristallinem Phosphit bezw. Phosphonit besteht, bezogen auf Phosphit bezw. Phosphonit in der Schmelze.

9. Verfahren gemäß Anspruch 1, worin das Kristallisationsmedium zu 50-100 % mit dem Amin gesättigt ist.

10. Verfahren gemäß Anspruch 1, worin die Schmelze 0,1 bis 50 Gew.-% an Amin (bezogen auf Phosphit bezw. Phosphonit) enthält.

**11.** Verfahren gemäß Anspruch 1, worin als Amin eines der Formel I

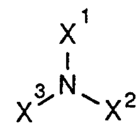

(I)

worin $X^1$ und $X^2$ unabhängig voneinander H, $C_1$-$C_{20}$-Alkyl, durch ein oder mehrere -O- unterbrochenes und optional durch ein oder mehrere Hydroxy-Gruppen substituiertes $C_4$-$C_{20}$-Alkyl, oder $C_2$-$C_{20}$-Hydroxyalkyl, und $X^3$ $C_2$-$C_{20}$-Alkyl, durch ein oder mehrere -O- unterbrochenes und optional durch ein oder mehrere Hydroxy-Gruppen substituiertes $C_4$-$C_{20}$-Alkyl, $-(CH_2)_m-NX^1X^2$, oder $C_2$-$C_{20}$-Hydroxyalkyl darstellen, oder worin $X^2$ und $X^3$ gemeinsam $-(CH_2)_m-$, $-C_2H_4-O-C_2H_4-$ oder $-C_2H_4-NX^1-C_2H_4-$ darstellen, wobei m eine ganze Zahl aus dem Bereich 4 bis 6 ist und $X^1$ und $X^2$ die oben angegebenen Bedeutungen haben;
oder ein cyclisches sterisch gehindertes Amin eingesetzt wird, das mindestens eine Gruppe der Formeln II oder III

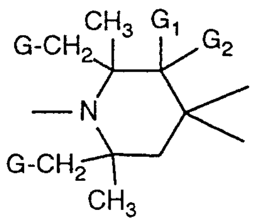

(II)

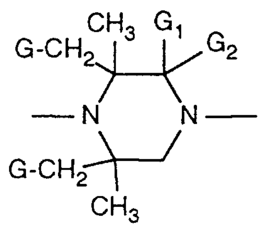

(III)

enthält, worin G Wasserstoff oder Methyl ist und $G_1$ und $G_2$ Wasserstoff, Methyl oder gemeinsam =O bedeuten.

**12.** Verfahren gemäß Anspruch 10, worin als Amin ein tertiäres Amin der Formel I oder ein cyclisches sterisch gehindertes Amin eingesetzt wird, das mindestens eine Gruppe der Formeln II oder III enthält, worin G Wasserstoff ist und $G^1$ und $G^2$ Wasserstoff oder gemeinsam einen Substituenten =O bedeuten.

**Claims**

**1.** A process for stabilizing a crystalline organic phosphite or phosphonite against hydrolysis, which comprises introducing a mixture comprising phosphite and phosphonite, a solvent or a solvent mixture, and 0.1 to 100% by weight (relative to phosphite or phosphonite) of an amine and having a temperature of 50-100°C as a homogeneous melt into a liquid crystallization medium whose temperature during the addition is maintained 10-70°C below the temperature of the melt.

**2.** A process according to claim 1, in which the melt comprises an alcohol or a hydrocarbon in an amount of 20 to 500% by weight, relative to the phosphite or phosphonite, as the main solvent and a further solvent in an amount of 0-50% by weight, relative to the main solvent.

**3.** A process according to claim 1, in which the temperature of the melt is 55-90°C.

**4.** A process according to claim 1, in which the difference in temperature between melt and crystallization medium is 30-70°C.

**5.** A process according to claim 1, in which the crystallization medium is maintained at a temperature which is at least 10°C below the resulting temperature of the liquidus.

**6.** A process according to claim 1, in which 80-800% by weight (relative to the phosphite or phosphonite) of a solvent are used as the crystallization medium.

**7.** A process according to claim 6, in which a $C_1$-$C_5$alkanol or a mixture of various $C_1$-$C_5$alkanols is used as the crystallization medium.

**8.** A process according to claim 6, in which the crystallization medium consists of a suspension of 2 to 20% by weight of crystalline phosphite or phosphonite, relative to the phosphite or phosphonite in the melt.

**9.** A process according to claim 1, in which the crystallization medium is saturated with 50-100% of amine.

**10.** A process according to claim 1, in which the melt contains 0.1 to 50% by weight of amine (relative to the phosphite or phosphonite).

**11.** A process according to claim 1, in which the amine used is one of the formula I

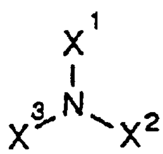 (I)

in which $X^1$ and $X^2$, independently of one another, are H, $C_1$-$C_{20}$alkyl, $C_4$-$C_{20}$alkyl which is interrupted by one or more -O- and unsubstituted or substituted by one or more hydroxyl groups, or is $C_2$-$C_{20}$hydroxyalkyl, and $X^3$ is $C_2$-$C_{20}$alkyl, $C_4$-$C_{20}$alkyl which is interrupted by one or more -O- and unsubstituted or substituted by one or more hydroxyl groups, or is $-(CH_2)_m-NX^1X^2$, or $C_2$-$C_{20}$hydroxyalkyl, or in which $X^2$ and $X^3$ together are $-(CH_2)_m-$, $-C_2H_4-O-C_2H_4-$ or $-C_2H_4-NX^1-C_2H_4-$, m being an integer from the range 4 to 6 and $X^1$ and $X^2$ being as defined above; or a cyclic sterically hindered amine containing at least one group of the formulae II or III

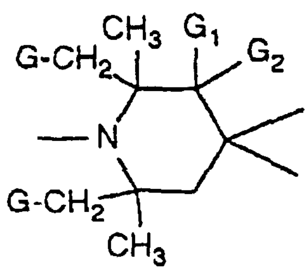 (II)

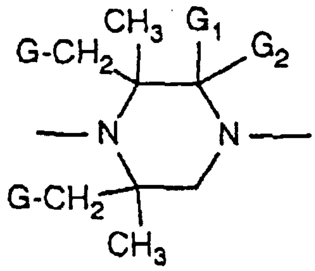

(III)

in which G is hydrogen or methyl, and $G_1$ and $G_2$ are hydrogen, methyl or together are =O.

**12.** A process according to claim 10, in which the amine used is a tertiary amine of the formula I or a cyclic sterically hindered amine containing at least one group of the formulae II or III, in which G is hydrogen and $G^1$ and $G^2$ are hydrogen or together are a substituent =O.

## Revendications

**1.** Procédé pour la stabilisation d'un phosphite ou phosphonite organique cristallin contre l'hydrolyse, caractérisé en ce qu'on ajoute un mélange chauffé à une température de 50 à 100°C contenant un phosphite ou phosphonite, un solvant ou mélange de solvants et de 0,1 à 100 % en masse (par rapport au phosphite ou phosphonite) d'une amine, en tant que matière fondue homogène, à un milieu de cristallisation liquide, dont la température est maintenue au cours de l'addition de 10 à 70°C inférieure à la température de la matière fondue.

**2.** Procédé selon la revendication 1, où la matière fondue contient, en tant que solvant principal, un alcool ou un hydrocarbure en une quantité de 20 à 500 % en masse, par rapport au phosphite ou phosphonite, et un autre solvant en une quantité de 0 à 50 % en masse, par rapport au solvant principal.

**3.** Procédé selon la revendication 1, où la température de la matière fondue est de 55 à 90°C.

**4.** Procédé selon la revendication 1, où la différence de température entre la matière fondue et le milieu de cristallisation est de 30 à 70°C.

**5.** Procédé selon la revendication 1, où le milieu de cristallisation est maintenu à une température d'au moins 10°C inférieure à la température du liquidus résultante.

**6.** Procédé selon la revendication 1, où l'on utilise comme milieu de cristallisation de 80 à 800 % en masse (par rapport au phosphite ou phosphonite) d'un solvant.

**7.** Procédé selon la revendication 6, où l'on utilise comme milieu de cristallisation un alcanol en $C_1$-$C_5$ ou un mélange de différents alcanols en $C_1$-$C_5$.

**8.** Procédé selon la revendication 6, où le milieu de cristallisation est constitué par une suspension de 2 à 20 % en masse de phosphite ou phosphonite cristallins, par rapport au phosphite ou phosphonite dans la matière fondue.

**9.** Procédé selon la revendication 1, où le milieu de cristallisation est saturé à 50-100 % par l'amine.

**10.** Procédé selon la revendication 1, où la matière fondue présente une teneur de 0,1 à 50 % en masse en amine (par rapport au phosphite ou phosphonite).

**11.** Procédé selon la revendication 1, où on utilise en tant qu'amine une amine de formule I

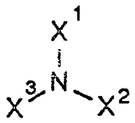

(I)

où

$X^1$ et $X^2$ représentent, indépendamment l'un de l'autre, des atomes d'hydrogène, des groupes alkyle en $C_1$-$C_{20}$, alkyle en $C_4$-$C_{20}$ interrompu par un ou plusieurs atomes de -O- et éventuellement par un ou plusieurs groupes hydroxy, ou hydroxyalkyle en $C_2$-$C_{20}$, et

$X^3$ représente des groupes alkyle en $C_2$-$C_{20}$, alkyle en $C_4$-$C_{20}$ interrompu par un ou plusieurs atomes de -O- et éventuellement par un ou plusieurs groupes hydroxy, $-(CH_2)_m-NX^1X^2$, ou hydroxyalkyle en $C_2$-$C_{20}$, ou dans laquelle $X^2$ et $X^3$ ensemble représentent $-(CH_2)_m-$, $-C_2H_4-O-C_2H_4-$ ou $-C_2H_4-NX^1-C_2H_4-$, m étant un entier dans le domaine de 4 à 6 et $X^1$ et $X^2$ possèdent les significations données ci-dessus ;

ou une amine cyclique à encombrement stérique, qui présente au moins un groupe de formules II ou III

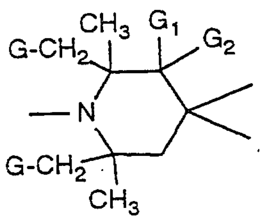

(II)

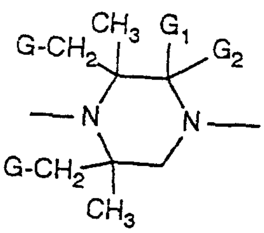

(III)

où

G représente un atome d'hydrogène ou un groupe méthyle et

$G_1$ et $G_2$ représentent des atomes d'hydrogène, des groupes méthyle ou ensemble représentent =O.

**12.** Procédé selon la revendication 10, où on utilise en tant qu'amine une amine tertiaire de formule I ou une amine cyclique à encombrement stérique, qui présente au moins un groupe de formules II ou III, où G représente un atome d'hydrogène et $G^1$ et $G^2$ représentent un atome d'hydrogène ou ensemble un substituant =O.